(19) **Europäisches Patentamt / European Patent Office / Office européen des brevets**

(11) **EP 4 679 928 A2**

(12) # EUROPEAN PATENT APPLICATION

(43) Date of publication:
14.01.2026   Bulletin 2026/03

(21) Application number: 25200173.0

(22) Date of filing: 30.07.2021

(51) International Patent Classification (IPC):
**H04W 74/08** (2024.01)

(52) Cooperative Patent Classification (CPC):
**H04W 72/23; H04W 74/0833;** H04W 72/0453;
H04W 74/0836

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority:   07.08.2020   CN 202010791729

(62) Document number(s) of the earlier application(s) in
accordance with Art. 76 EPC:
**21852128.4 / 4 192 164**

(71) Applicant: **Huawei Technologies Co., Ltd.**
**Shenzhen, Guangdong 518129 (CN)**

(72) Inventors:
• **HOU, Hailong**
**Shenzhen, 518129 (CN)**
• **ZHENG, Juan**
**Shenzhen, 518129 (CN)**
• **LI, Chaojun**
**Shenzhen, 518129 (CN)**
• **FEI, Yongqiang**
**Shenzhen, 518129 (CN)**

(74) Representative: **Gill Jennings & Every LLP**
**The Broadgate Tower**
**20 Primrose Street**
**London EC2A 2ES (GB)**

Remarks:
• This application was filed on 04-09-2025 as a
divisional application to the application mentioned
under INID code 62.
• Claims filed after the date of filing of the application/
after the date of receipt of the divisional application
(Rule 68(4) EPC).

(54) ## FREQUENCY DOMAIN RESOURCE DETERMINING METHOD, DEVICE, AND STORAGE MEDIUM

(57)     This application provides a frequency domain resource determining method, a device, and a storage medium. The method includes: A network device configures at least two frequency domain resources for a terminal device, where the at least two frequency domain resources include at least one first-type frequency domain resource and at least one second-type frequency domain resource, and the second-type frequency domain resource may be used by a REDCAP-type terminal to communicate with the network device. The network device sends, to the terminal device, configuration information in which at least two frequency domain resources are configured. The terminal device determines one of the at least two frequency domain resources based on the configuration information, and communicates with the network device by using the frequency domain resource. The network device configures a plurality of frequency domain resources, and at least one of the plurality of frequency domain resources can be used by the terminal device. Therefore, a problem that the terminal device cannot normally communicate with the network device because a bandwidth of a currently configured frequency domain resource exceeds a maximum bandwidth of the terminal device can be avoided, so that reliability of a communication system is improved.

FIG. 4

## Description

This application claims priority to Chinese Patent Application No. 202010791729.0, filed with the China National Intellectual Property Administration on August 7, 2020 and entitled "FREQUENCY DOMAIN RESOURCE DETERMINING METHOD, DEVICE, AND STORAGE MEDIUM", which is incorporated herein by reference in its entirety.

## TECHNICAL FIELD

This application relates to the field of communication technologies, and in particular, to a frequency domain resource determining method, a device, and a storage medium.

## BACKGROUND

With development of communication technologies, in addition to an enhanced mobile broadband (enhanced mobile broadband, eMBB) service, a new radio (new radio, NR) system may further support a plurality of other service types, for example, data transmission services of various internet of things devices in an internet of things scenario. Terminals supporting these services have characteristics such as a reduced bandwidth, a reduced processing speed, and a reduced quantity of antennas. Such terminals are referred to as reduced capability (reduced capability, REDCAP)-type terminals. The REDCAP-type terminals have several typical bandwidths: 5 MHz, 10 MHz, and 20 MHz.

A bandwidth part (bandwidth part, BWP) is defined in the NR system. BWPs are frequency domain resources used by terminals to receive and send data, and include a downlink BWP and an uplink BWP. A network side configures an initial downlink BWP (initial downlink BWP) and an initial uplink BWP (initial uplink BWP) for the terminal. Both the initial downlink BWP and the initial uplink BWP are cell-specific BWPs.

In a conventional technology, FR 1 is a frequency range wherein the frequency is less than 6 GHz, and a maximum bandwidth of an initial BWP can be up to 100 MHz. However, a bandwidth of the REDCAP-type terminal is small. As a result, such terminals may fail to perform a random access process normally, and communication reliability is reduced.

## SUMMARY

This application provides a frequency domain resource determining method, a device, and a storage medium, to help improve reliability in a communication process.

According to a first aspect, an embodiment of this application provides a frequency domain resource determining method. The method includes: A network device sends configuration information to a terminal device, where the configuration information includes configuration information of at least two frequency domain resources, and the at least two frequency domain resources include at least one first-type frequency domain resource and at least one second-type frequency domain resource. The first-type frequency domain resource is for a first-type terminal device and/or a second-type terminal device to communicate with the network device; and the second-type frequency domain resource is for the second-type terminal device to communicate with the network device. The network device communicates with the terminal device by using one of the at least two frequency domain resources.

The first-type terminal device in the foregoing solution may be a common terminal, and the second-type terminal device may be a REDCAP-type terminal or another type of terminal. The terminal device in the foregoing solution may be a common terminal, or may be a REDCAP-type terminal.

In the foregoing solution, a frequency domain resource configured by a network device for a terminal device includes N consecutive/inconsecutive physical resource blocks/resource blocks (PRBs/RBs), where N is a positive integer. For example, the frequency domain resource includes N consecutive PRBs/RBs, and the frequency domain resource may be an initial uplink BWP.

In the foregoing solution, the network device configures, for the terminal device, the at least two frequency domain resource, and sends, to the terminal device, the configuration information in which the at least two frequency domain resources are configured. The terminal device determines one of the at least two frequency domain resources based on the configuration information, and communicates with the network device by using the frequency domain resource, so that data transmission performance of the terminal device is improved. The network device configures a plurality of frequency domain resources, and at least one of the plurality of frequency domain resources can be used by the terminal device. Therefore, a problem that the terminal device cannot normally communicate because a bandwidth of a frequency domain resource currently configured by a network exceeds a maximum bandwidth supported by the terminal device can be avoided, so that communication reliability is improved.

Optionally, the first-type frequency domain resource includes a first initial uplink bandwidth part BWP, and the second-type frequency domain resource includes a second initial uplink BWP.

In a possible design of the first aspect, the first-type frequency domain resource is for the first-type terminal device and the second-type terminal device to communicate with the network device, and the method further includes: The network device sends indication information to the terminal device, where the indication information indicates one of the at least two frequency domain resources, and the one of the at least two frequency domain resources is for the terminal device to communicate with the network device.

In the foregoing solution, the first-type frequency domain resource configured by the network device for the terminal device can be used by the first-type terminal device to communicate with the network device, and can be used by the second-type terminal device to communicate with the network device. To be specific, the first-type frequency domain resource configured by the network device may be shared with two types of terminal devices for use. For example, the first-type frequency domain resource may be used by the common terminal and the REDCAP-type terminal.

In a possible design of the first aspect, the first-type frequency domain resource is used only by the first-type terminal device to communicate with the network device, and the method further includes: The network device sends indication information to the terminal device, where the indication information indicates one of at least two second-type frequency domain resources, and one of the at least two second-type frequency domain resources is for the terminal device to communicate with the network device.

In the foregoing solution, the first-type frequency domain resource configured by the network device for the terminal device can be used by the first-type terminal device to communicate with the network device, but cannot be used by the second-type terminal device to communicate with the network device. To be specific, the first-type frequency domain resource configured by the network device is used only by the first-type terminal device, and the second-type terminal device can use only the second-type frequency domain resource but cannot use the first-type frequency domain resource. For example, the first-type frequency domain resource can be used by the common terminal, the REDCAP-type terminal cannot use the first-type frequency domain resource, and the REDCAP-type terminal communicates with the network device by using the second-type frequency domain resource.

In the foregoing two possible designs, in addition to configuring the at least two frequency domain resources for the terminal device and sending configuration information including configuration information of the at least two frequency domain resources to the terminal device, the network device further sends the indication information to the terminal device, to enable the terminal device to determine one of the at least two frequency domain resources based on the configuration information and the indication information, and communicate with the network device by using the frequency domain resource, so that the data transmission performance of the terminal device is improved. The network device configures a plurality of frequency domain resources, and at least one of the plurality of frequency domain resources can be used by the terminal device. Therefore, a problem that the terminal device cannot normally communicate because a bandwidth of a frequency domain resource currently configured by a network exceeds a maximum bandwidth supported by the terminal device can be avoided. The network device sends the indication information to the terminal device. In addition to indicating that the terminal device uses one of the at least two frequency domain resources, the indication information may further indicate that the terminal device is not allowed to be accessed or that a terminal device that has been accessed is not allowed to be accessed. This helps a network side flexibly schedule the plurality of frequency domain resources, to balance access load of each frequency domain resource, and help improve user transmission performance.

Optionally, the indication information is included in a random access response message, and the random access response message is for the network device to respond to a random access request of the terminal device. In this solution, the network device sends the indication information to the terminal device by using the random access response message in a random access process, to indicate that the terminal device uses one of the at least two frequency domain resources to communicate with the network device, that the terminal device is not allowed to be accessed, or that the terminal device that has been accessed is not allowed to be accessed. The random access process includes two random access processes: a 4-step random access process (4-Step RACH process) and a 2-step random access process (2-Step RACH process).

Optionally, the indication information is included in a Msg2, and the Msg2 is for the network device to respond to the random access request of the terminal device. The Msg2 in this solution belongs to a random access response message in the 4-step RACH process. The network device sends the indication information to the terminal device by using the Msg2, to indicate that the terminal device uses one of the at least two frequency domain resources to communicate with the network device, that the terminal device is not allowed to be accessed, or that the terminal device that has been accessed is not allowed to be accessed.

Optionally, the indication information is included in a MsgB, and the MsgB is for the network device to respond to the random access request of the terminal device. The MsgB in this solution belongs to a random access response message in the 2-step RACH process. The network device sends the indication information to the terminal device by using the MsgB, to indicate that the terminal device uses one of the at least two frequency domain resources to communicate with the network device, that the terminal device is not allowed to be accessed, or that the terminal device that has been accessed is not allowed to be accessed.

Optionally, the indication information is included in a physical uplink shared channel PUSCH frequency domain resource allocation indication field in an uplink grant in the random access response message. In a possible implementation, the indication information is located in at least one most significant bit in the physical uplink shared channel PUSCH frequency domain resource allocation indication field in the uplink grant in the random access response message. In a possible implementation, the indication information is located in several least significant bits (least significant bits, LSBs) of a random access preamble identifier RAPID of a MAC subPDU in which a RAR is carried. In a possible implementation, the indication information is located in several bits of reserved bits of the MAC subPDU in which the RAR is carried. In the foregoing solution, the network device sends the indication information to the terminal device by using several bits in the random access response message, to indicate that the terminal device uses one of the at least two frequency domain resources to communicate with the network device, that the terminal device is not allowed to be accessed, or that the terminal device that has been accessed is not allowed to be accessed.

Optionally, the indication information is included in downlink control information DCI, and the DCI is used to schedule the random access response message. In a possible implementation, the indication information may be included in DCI that is used to schedule a Msg2, or may be included in DCI that is used to schedule a MsgB. In a possible implementation, the indication information is located in at least one bit of reserved bits of the DCI. In the foregoing solution, the network device sends the indication information to the terminal device by using the DCI, to indicate that the terminal device uses one of the at least two frequency domain resources to communicate with the network device, that the terminal device is not allowed to be accessed, or that the terminal device that has been accessed is not allowed to be accessed.

Optionally, the indication information is included in a random access response message and DCI for scheduling the random access response message, and bits in the random access response message and the DCI jointly indicate that the terminal device uses one of the at least two frequency domain resources to communicate with the network device. In this solution, a case in which the bits in the DCI or the random access response message are insufficient is mainly considered. The network device may jointly indicate one of the at least two frequency domain resources by using a combination of the bits in the DCI and the random access response message. Joint indication can save bit overheads.

In a possible design of the first aspect, that the network device sends the configuration information to the terminal device includes: The network device sends the configuration information to the terminal device by using system information, higher layer signaling, or physical layer signaling. The system information includes a SIB 1 and other system information. The higher layer signaling includes radio resource control (radio resource control, RRC) layer signaling and a media access control control element (media access control control element, MAC CE). The physical layer signaling includes signaling such as downlink control information (downlink control information, DCI).

Optionally, a bandwidth of the second-type frequency domain resource is less than or equal to a maximum bandwidth supported by the terminal device. In some embodiments, the bandwidth of the second-type frequency domain resource is less than or equal to a maximum bandwidth supported by the REDCAP-type terminal, and typical bandwidths corresponding to the REDCAP-type terminal include 5 MHz, 10 MHz, and 20 MHz.

Optionally, a bandwidth of the second-type frequency domain resource is less than or equal to a maximum bandwidth supported by the first-type terminal device.

According to a second aspect, an embodiment of this application provides a frequency domain resource determining method. The method includes: A terminal device receives configuration information from a network device, where the configuration information includes configuration information of at least two frequency domain resources, and the at least two frequency domain resources include at least one first-type frequency domain resource and at least one second-type frequency domain resource. The first-type frequency domain resource is for a first-type terminal device and/or a second-type terminal device to communicate with the network device; and the second-type frequency domain resource is for the second-type terminal device to communicate with the network device. The terminal device determines one of the at least two frequency domain resources based on the configuration information. The terminal device communicates with the network device by using one of the at least two frequency domain resources.

In the foregoing solution, the network device sends the configuration information to the terminal device, where the configuration information includes the configuration information of the at least two frequency domain resources. The terminal device determines one of the at least two frequency domain resources based on the configuration information, and communicates with the network device by using the frequency domain resource, so that the data transmission performance of the terminal device is improved. The network device configures a plurality of frequency domain resources, and at least one of the plurality of frequency domain resources can be used by the terminal device. Therefore, a problem that the terminal device cannot normally communicate because a bandwidth of a frequency domain resource currently configured by a network exceeds a maximum bandwidth supported by the terminal device can be avoided.

Optionally, the first-type frequency domain resource includes a first initial uplink bandwidth part BWP, and the second-type frequency domain resource includes a second initial uplink BWP.

In a possible design of the second aspect, the first-type frequency domain resource is for the first-type terminal device and the second-type terminal device to communicate with the network device, and the method further includes: The terminal device receives indication information from the network device, where the indication information indicates one of the at least two frequency domain resources. The terminal device determines one of the at least two frequency domain resources based on the configuration information and the indication information.

In a possible design of the second aspect, the first-type frequency domain resource is only used by the first-type terminal device to communicate with the network device, and the method further includes: The terminal device receives indication information from the network device, where the indication information indicates one of at least two second-type frequency domain resources. The terminal device determines one of the at least two second-type frequency domain resources based on the configuration information and the indication information.

In the foregoing two possible designs, in addition to receiving the configuration information from the network device, the terminal device further receives the indication information from the network device. The terminal device determines one of the at least two frequency domain resources based on the configuration information and the indication information, and communicates with the network device by using the frequency domain resource, so that the data transmission performance of the terminal device is improved. The network device configures a plurality of frequency domain resources, and at least one of the plurality of frequency domain resources can be used by the terminal device. Therefore, a problem that the terminal device cannot normally communicate because a bandwidth of a frequency domain resource currently configured by a network exceeds a maximum bandwidth supported by the terminal device can be avoided.

Optionally, the indication information is included in a random access response message, and the random access response message is for the network device to respond to a random access request of the terminal device.

Optionally, the indication information is included in a Msg2, and the Msg2 is for the network device to respond to the random access request of the terminal device.

Optionally, the indication information is included in a MsgB, and the MsgB is for the network device to respond to the random access request of the terminal device.

Optionally, the indication information is located in a physical uplink shared channel PUSCH frequency domain resource allocation indication field in an uplink grant in the random access response message. In a possible implementation, the indication information is located in at least one most significant bit in the physical uplink shared channel PUSCH frequency domain resource allocation indication field in the uplink grant in the random access response message. In a possible implementation, the indication information is located in several least significant bits (least significant bits, LSBs) of a random access preamble identifier RAPID of a MAC subPDU in which a RAR is carried. In a possible implementation, the indication information is located in several bits of reserved bits of the MAC subPDU in which the RAR is carried.

Optionally, the indication information is included in downlink control information DCI, the DCI is used to schedule a random access response message, and the random access response message is for the network device to respond to a random access request of the terminal device. In a possible implementation, the indication information is included in a reserved bit of the DCI.

Optionally, the indication information is included in a random access response message and DCI for scheduling the random access response message, and bits in the random access response message and the DCI jointly indicate that the terminal device uses one of the at least two frequency domain resources to communicate with the network device.

Optionally, a bandwidth of the second-type frequency domain resource is less than or equal to a maximum bandwidth supported by the terminal device. In some embodiments, the bandwidth of the second-type frequency domain resource is less than or equal to a maximum bandwidth supported by a REDCAP-type terminal.

Optionally, a bandwidth of the second-type frequency domain resource is less than or equal to a maximum bandwidth supported by the first-type terminal device.

Several optional solutions of the indication information are the same as those in the first aspect. For details, refer to the descriptions of the first aspect. Details are not described herein again.

In a possible design of the second aspect, that the terminal device sends the configuration information from the network device includes: The terminal device receives, from system information, higher layer signaling, or physical layer signaling, the configuration information from the network device.

According to a third aspect, an embodiment of this application provides a network device. The network device includes a transceiver module and a processing module. The transceiver module is configured to send configuration information to a terminal device, where the configuration information includes configuration information of at least two frequency domain resources, and the at least two frequency domain resources include at least one first-type frequency domain resource and at least one second-type frequency domain resource. The first-type frequency domain resource is for a first-type terminal device and/or a second-type terminal device to communicate with the network device; and the second-type frequency domain resource is for the second-type terminal device to communicate with the network device. The processing module is configured to communicate with the terminal device by using one of the at least two frequency domain resources.

Optionally, the first-type frequency domain resource includes a first initial uplink bandwidth part BWP, and the second-type frequency domain resource includes a second initial uplink BWP.

Optionally, the first-type frequency domain resource is for the first-type terminal device and the second-type terminal device to communicate with the network device. The transceiver module is further configured to send indication information to the terminal device, where the indication information indicates one of the at least two frequency domain resources.

Optionally, the first-type frequency domain resource is used only by the first-type terminal device to communicate with the network device, and the transceiver module is further configured to send indication information to the terminal device, where the indication information indicates one second-type frequency domain resource in the at least two frequency domain resources.

Optionally, the indication information is included in a random access response message, and the random access response message is for the network device to respond to a random access request of the terminal device.

Optionally, the indication information is included in a Msg2, and the Msg2 is for the network device to respond to the random access request of the terminal device.

Optionally, the indication information is included in a MsgB, and the MsgB is for the network device to respond to the random access request of the terminal device.

Optionally, the indication information is located in a physical uplink shared channel PUSCH frequency domain resource allocation indication field in an uplink grant in the random access response message. In a possible implementation, the indication information is located in at least one most significant bit in the physical uplink shared channel PUSCH frequency domain resource allocation indication field in the uplink grant in the random access response message.

Optionally, the indication information is included in downlink control information DCI, the DCI is used to schedule a random access response message, and the random access response message is for the network device to respond to a random access request of the terminal device. In a possible implementation, the indication information is included in a reserved bit of the DCI.

Optionally, the indication information is included in a random access response message and DCI for scheduling the random access response message, and bits in the random access response message and the DCI jointly indicate that the terminal device uses one of the at least two frequency domain resources to communicate with the network device.

Optionally, a bandwidth of the second-type frequency domain resource is less than or equal to a maximum bandwidth supported by the terminal device.

Optionally, the transceiver module is specifically configured to send the configuration information to the terminal device by using system information, higher layer signaling, or physical layer signaling.

According to a fourth aspect, an embodiment of this application provides a terminal device. The terminal device includes a transceiver module and a processing module. The transceiver module is configured to receive configuration information from a network device, where the configuration information includes configuration information of at least two frequency domain resources, and the at least two frequency domain resources include at least one first-type frequency domain resource and at least one second-type frequency domain resource. The first-type frequency domain resource is for a first-type terminal device and/or a second-type terminal device to communicate with the network device; and the second-type frequency domain resource is for the second-type terminal device to communicate with the network device. The processing module is configured to determine one of the at least two frequency domain resources based on the configuration information, and communicate with the network device by using one of the at least two frequency domain resources.

Optionally, the first-type frequency domain resource includes a first initial uplink bandwidth part BWP, and the second-type frequency domain resource includes a second initial uplink BWP.

Optionally, the first-type frequency domain resource is for the first-type terminal device and the second-type terminal device to communicate with the network device. The transceiver module is further configured to receive indication information from the network device, where the indication information indicates one of the at least two frequency domain resources. The processing module is specifically configured to determine one of the at least two frequency domain resources based on the configuration information and the indication information.

Optionally, the first-type frequency domain resource is only used by the first-type terminal device to communicate with the network device. The transceiver module is further configured to receive indication information from the network device, where the indication information indicates one of at least two second-type frequency domain resources. The processing module is specifically configured to determine one of the at least two second-type frequency domain resources based on the configuration information and the indication information.

Optionally, the indication information is included in a random access response message, and the random access response message is for the network device to respond to a random access request of the terminal device.

Optionally, the indication information is included in a Msg2, and the Msg2 is for the network device to respond to the random access request of the terminal device.

Optionally, the indication information is included in a MsgB, and the MsgB is for the network device to respond to the random access request of the terminal device.

Optionally, the indication information is located in a physical uplink shared channel PUSCH frequency domain resource allocation indication field in an uplink grant in the random access response message. In a possible implementation, the indication information is located in at least one most significant bit in the physical uplink shared channel PUSCH frequency domain resource allocation indication field in the uplink grant in the random access response message.

Optionally, the indication information is included in downlink control information DCI, the DCI is used to schedule a random access response message, and the random access response message is for the network device to respond to a random access request of the terminal device. In a possible implementation, the indication information is included in a reserved bit of the DCI.

Optionally, the indication information is included in a random access response message and DCI for scheduling the random access response message, and bits in the random access response message and the DCI jointly indicate that the terminal device uses one of the at least two frequency domain resources to communicate with the network device.

Optionally, a bandwidth of the second-type frequency domain resource is less than or equal to a maximum bandwidth supported by the terminal device.

Optionally, the transceiver module is specifically configured to receive, from system information, higher layer signaling, or physical layer signaling, the configuration information from the network device.

According to a fifth aspect, an embodiment of this application provides a network device. The network device includes a memory and a processor. The memory is configured to store program instructions. The processor is configured to invoke the program instructions stored in the memory, to implement the method according to any one of the designs in the first aspect.

According to a sixth aspect, an embodiment of this application provides a terminal device. The network device includes a memory and a processor. The memory is configured to store program instructions. The processor is configured to invoke the program instructions stored in the memory, to implement the method according to any one of the designs in the second aspect.

According to a seventh aspect, an embodiment of this application provides a readable storage medium, where the readable storage medium stores executable instructions, and when at least one processor of a network device executes the executable instructions, the network device performs the method according to any one of the designs in the first aspect.

According to an eighth aspect, an embodiment of this application provides a readable storage medium, where the readable storage medium stores executable instructions, and when at least one processor of a terminal device executes the executable instructions, the terminal device performs the method according to any one of the designs in the second aspect.

According to a ninth aspect, an embodiment of this application provides a chip, including a processor and an interface, where the processor is configured to invoke, from a memory, a computer program stored in the memory, and run the computer program, to perform the method according to any one of the designs in the first aspect.

According to a tenth aspect, an embodiment of this application provides a chip, including a processor and an interface, where the processor is configured to invoke, from a memory, a computer program stored in the memory, and run the computer program, to perform the method according to any one of the designs in the second aspect.

According to an eleventh aspect, an embodiment of this application provides a communication system, including at least one network device according to the fifth aspect and the terminal device according to the sixth aspect, where the network device may be configured to perform the method according to any one of the designs in the first aspect, and the terminal device may be configured to perform the method according to any one of the designs in the second aspect.

Embodiments of this application provide a frequency domain resource determining method, a device, and a storage medium. The method includes: A network device preconfigures at least two frequency domain resources for a terminal device, where the at least two frequency domain resources include at least one first-type frequency domain resource and at least one second-type frequency domain resource, the first-type frequency domain resource is for a first-type terminal device and/or a second-type terminal device to communicate with the network device, and the second-type frequency domain resource is for the second-type terminal device to communicate with the network device. The network device sends, to the terminal device, configuration information in which at least two frequency domain resources are configured. The terminal device determines one of the at least two frequency domain resources based on the configuration information, and communicates with the network device by using the frequency domain resource. The network device configures a plurality of frequency domain resources for the terminal device, and at least one of the plurality of frequency domain resources can be used by the terminal device. Therefore, a problem that the terminal device cannot normally communicate with the network device because a bandwidth of a configured frequency domain resource exceeds a maximum bandwidth supported by the terminal device in a conventional technology can be avoided, so that reliability of data transmission of a communication system is improved.

**BRIEF DESCRIPTION OF DRAWINGS**

FIG. 1 is a diagram of an architecture of a system according to an embodiment of this application;

FIG. 2 is a schematic diagram of a random access process according to an embodiment of this application;

FIG. 3 is a schematic diagram of a random access process according to an embodiment of this application;

FIG. 4 is a schematic interaction diagram of a frequency domain resource determining method according to an embodiment of this application;

FIG. 5 is a schematic diagram of a frequency domain resource configured by a network device for a terminal device according to an embodiment of this application;

FIG. 6 is a schematic interaction diagram of a frequency domain resource determining method according to an embodiment of this application;

FIG. 7 is a schematic diagram of a PUSCH frequency domain resource allocation field in a random access response RAR according to an embodiment of this application;

FIG. 8 is a schematic diagram of a structure of a MAC RAR according to an embodiment of this application;

FIG. 9 is a schematic diagram of indicating an initial uplink BWP by a reserved bit in downlink control information DCI according to an embodiment of this application;

FIG. 10 is a schematic diagram of a structure of a network device according to an embodiment of this application;

FIG. 11 is a schematic diagram of a structure of a terminal device according to an embodiment of this application;

FIG. 12 is a schematic diagram of a hardware structure of a network device according to an embodiment of this application; and

FIG. 13 is a schematic diagram of a hardware structure of a terminal device according to an embodiment of this application.

## DESCRIPTION OF EMBODIMENTS

The following describes technical solutions of this application with reference to accompanying drawings.

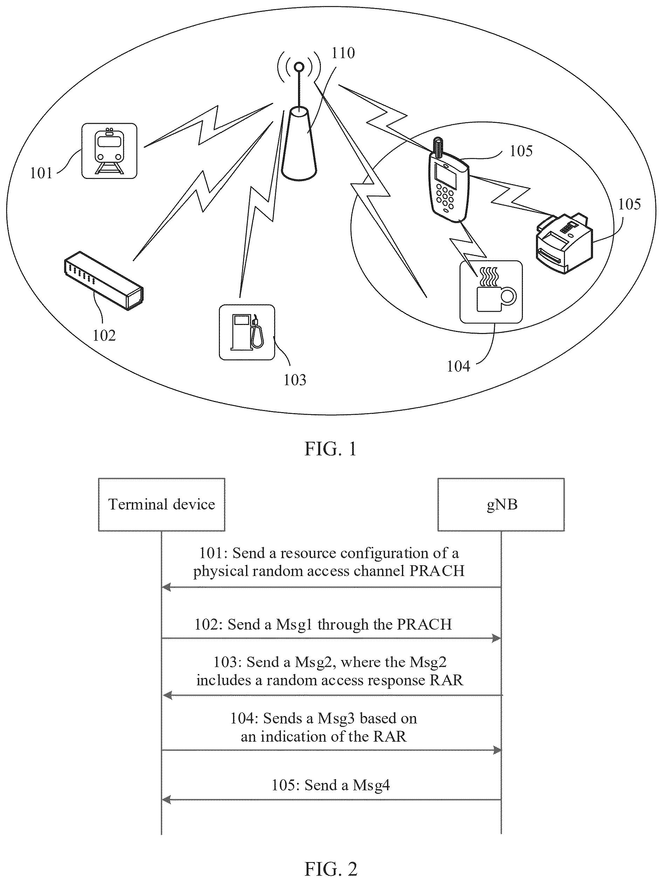

FIG. 1 is a diagram of an architecture of a system according to an embodiment of this application. As shown in FIG. 1, an embodiment of this application provides a communication system. The communication system 100 includes a network device 110 and a plurality of terminal devices, for example, terminal devices 101 to 106 in FIG. 1. The network device 110 is communicatively connected to the terminal devices 101 to 106. For example, the terminal device 104 and the terminal device 106 may further be communicatively connected to the network device 110 via the terminal device 105.

The terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on the surface of water (such as in a steamship); or may be deployed in the air (such as on an airplane, a balloon, and a satellite). The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. In embodiments of this application, an apparatus configured to implement functions of the terminal may be a terminal, or may be an apparatus, for example, a chip system, that can support the terminal in implementing the functions. The apparatus may be installed in the terminal. In this embodiment of this application, the chip system may include a chip, or may include a chip and another discrete component.

The network device in embodiments of this application includes a base station (base station, BS), and may be a device that is deployed in a radio access network and that can perform wireless communication with the terminal. The base station may be in a plurality of forms, such as a macro base station, a micro base station, a relay station, and an access point. For example, the base station in embodiments of this application may be a base station in 5G or a base station in LTE. The base station in 5G may also be referred to as a transmission reception point (transmission reception point, TRP) or a gNB. In embodiments of this application, an apparatus configured to implement functions of the network device may be a network device, or may be an apparatus, for example, a chip system, that can support the network device in implementing the functions. The apparatus may be installed in the network device.

The technical solutions in embodiments of this application may be applied to a long term evolution (Long Term Evolution, LTE) architecture, an architecture of a universal mobile telecommunications system (Universal Mobile Telecommunications System, UMTS) terrestrial radio access network (UMTS Terrestrial Radio Access Network, UTRAN), or an architecture of a global system for mobile communications (Global System for Mobile Communication, GSM)/enhanced data rates for GSM evolution (Enhanced Data Rates for GSM Evolution, EDGE) system radio access network (GSM EDGE Radio Access Network, GERAN). In addition, the technical solutions provided in embodiments of this application may be further applied to any other wireless communication system, for example, a public land mobile network (Public Land Mobile Network, PLMN) system, a 5G communication system, or a communication system after 5G, that has a similar structure and function. This is not limited in embodiments of this application. It should be noted that the technical solutions provided in embodiments of this application may be further applied to a machine-to-machine (machine-to-machine, M2M) system, and are mainly used in an air interface physical layer process. An existing NR system architecture may be used as a system architecture of the machine-to-machine system.

The wireless communication between the communication devices may include: wireless communication between a network device and a terminal, wireless communication between network devices, and wireless communication between terminals. In embodiments of this application, the term "wireless communication" may be referred to as "communication" for short, and the term "communication" may also be described as "data transmission", "information transmission", or "transmission". A person skilled in the art may use the technical solutions provided in embodiments of this application to perform wireless communication between a network device and a terminal, for example, wireless communication between an access network device and a terminal or wireless communication between a core network device and a terminal.

Currently, a bandwidth part BWP is defined in an NR system, and is for a terminal to receive or send data. For a terminal in an RRC_idle state or an RRC_inactive state, a network side configures an initial downlink BWP (initial downlink BWP) and an initial uplink BWP (initial uplink BWP) for the terminal. Both the initial downlink BWP and the initial uplink BWP are cell-specific BWPs. For a terminal in an RRC_connected state, in addition to the initial uplink BWP and the initial downlink BWP, a base station may configure a user-specific downlink BWP and a user-specific uplink BWP for each terminal by using radio resource control (Radio Resource Control, RRC) dedicated signaling. A maximum of four user-specific uplink BWPs and a maximum of four user-specific downlink BWPs may be configured for each terminal. In an implementation, the network side may configure the initial uplink BWP and the initial downlink BWP for the terminal by using the RRC dedicated signaling. The network side configures one of the BWPs as an active BWP for the terminal, and the terminal works on the currently active BWP. According to a current protocol, when a carrier frequency of an FR 1 is less than 6 GHz, a maximum bandwidth of an initial downlink BWP is 20 MHz, there is no limitation on a configuration of an initial uplink BWP, and a maximum bandwidth of the initial uplink BWP may reach 100 MHz.

In an NR R17 REDCAP subject, a terminal of a new type is considered to be introduced into an internet of things scenario. In comparison with an existing NR terminal, the terminal has characteristics such as a reduced bandwidth, a reduced processing speed, and a reduced quantity of antennas. Such a terminal is referred to as a REDCAP-type terminal. The REDCAP-type terminal may support one or more bandwidths, and typical bandwidths include 5 MHz, 10 MHz, and 20 MHz. However, a bandwidth of an existing initial uplink BWP in the NR system may exceed the bandwidth of the REDCAP-type terminal. As a result, the REDCAP-type terminal cannot perform a random access process or early data transmission.

To resolve the foregoing technical problem, embodiments of this application provide a frequency domain resource determining method, mainly for configuring a new frequency domain resource for a REDCAP-type terminal in a communication system, where a bandwidth of the newly configured frequency domain resource does not exceed a bandwidth of the REDCAP-type terminal. It may be understood that, in an internet of things scenario, there are a large quantity of accessing terminals. Considering that uplink transmission includes a Msg1, a Msg3, early data transmission, or the like, which leads to heavy uplink load, a network side may configure at least two frequency domain resources for the terminal, to achieve load balancing.

In embodiments of this application, a frequency domain resource configured by a network device for a terminal device includes N consecutive/inconsecutive physical resource blocks/resource blocks (PRBs/RBs), where N is a positive integer. For example, the frequency domain resource includes N consecutive PRBs/RBs, and the frequency domain resource may be an initial uplink BWP.

In embodiments of this application, all invention content that uses the initial uplink BWP as an example is equivalent to invention content that is implemented by using the frequency domain resource.

Before the technical solutions provided in this application are described, a random access process in a current NR system is first described.

A terminal in an RRC_idle state or an RRC_inactive state may complete network access through an uplink random access process. A terminal that supports early data transmission may further complete data transmission in a random access process. For a terminal in an RRC_connected state, in one case, a network side may also indicate the terminal to perform random access to re-obtain timing advance (timing advance, TA) synchronization. In another case, because of a beam failure, the terminal performs beam recovery through a random access process. Currently, a random access process in NR includes the following two types: a four-step random access process (4-step RACH process) defined in NR R15 and a two-step random access process (2-step RACH process) defined in NR R16.

FIG. 2 is a schematic diagram of a random access process according to an embodiment of this application. As shown in FIG. 2, the random access process provided in this embodiment is a 4-step RACH process, and mainly includes the following steps.

Step 101: A gNB sends a resource configuration of a physical random access channel PRACH to a terminal device.

Specifically, the gNB sends the resource configuration of the PRACH to the terminal device by using a system broadcast message, where the resource configuration of the PRACH mainly includes a time-frequency domain resource of the PRACH, a preamble preamble sequence, or the like.

In an NR system, a time-frequency resource on which the gNB sends and receives the physical random access channel PRACH is referred to as a random access occasion (RACH occasion, RO). On a same RO, the gNB may configure a plurality of mutually orthogonal preambles, and different terminal devices may perform random access on the same RO by using different preambles or a same preamble.

Step 102: The terminal device sends a Msg1 to the gNB through the PRACH.

The Msg1 includes a preamble preamble. The gNB detects, on a RO resource, preambles sent by terminal devices. If the preambles are detected, the gNB performs step 103 in response to random access requests of the terminal devices.

Step 103: The gNB sends a Msg2 to the terminal device, where the Msg2 includes a random access response RAR.

Specifically, for RARs for a same RO, the gNB may schedule a physical downlink shared channel PDSCH by scrambling a cyclic redundancy check CRC of DCI format 1_0 by using a random access radio network temporary identifier RA-RNTI, where the PDSCH carries RARs of all or some random access requests for the RO. One RO is associated with only one RA-RNTI.

After sending the Msg1, the terminal device starts a random access response window, and listens to, in the window, the RAR sent by a network side.

If the terminal device successfully detects the RAR, the random access succeeds, and step 104 is performed. Specifically, if the terminal device receives a physical downlink control channel PDCCH scrambled by using the RA-RNTI, and the RAR that is carried by the PDSCH scheduled by the PDCCH includes a MAC subPDU that is identified by using a random access preamble identifier RAPID that is the same as a sent preamble index, it is considered that the random access succeeds.

If no RAR is detected by the terminal device, the random access fails. The terminal device re-initiates a random access process based on a fallback parameter indicated by the gNB, until a maximum quantity of times of random access is reached.

Step 104: The terminal device sends a Msg3 to the gNB based on an indication of the RAR.

In this step, a main function of the Msg3 is to send an RRC connection establishment request, and the Msg3 carries an identifier ID of the terminal device. In an early data transmission scenario, the Msg3 may further carry service data (UL small data). In this case, a terminal in an RRC_inactive state does not need to enter an RRC_connected state through the random access process before performing service data transmission, to save air interface resources, reduce power consumption of the terminal, and reduce a transmission delay.

Step 105: The gNB sends a Msg4 (feedback) to the terminal device.

Specifically, after sending the Msg3, the terminal device listens to the Msg4 delivered by the network side. The Msg4 carries a contention resolution identifier and an air interface parameter configuration for the terminal device. If the terminal device successfully receives the Msg4, the random access succeeds, and the terminal device sends a Msg5 to the gNB, where the Msg5 is used to send an RRC establishment completion command. If the Msg4 is not received by the terminal device, the random access fails. The terminal device re-initiates a random access process based on the fallback parameter indicated by the gNB, until the maximum quantity of times of random access is reached.

In an existing NR technology, for the 4-step RACH process, the Msg2 and the Msg4 are transmitted on an initial downlink BWP, and the Msg1 and the Msg3 are transmitted on an initial uplink BWP. For the Msg1, all configured PRACH resources need to be entirely within an initial uplink BWP range according to a current protocol.

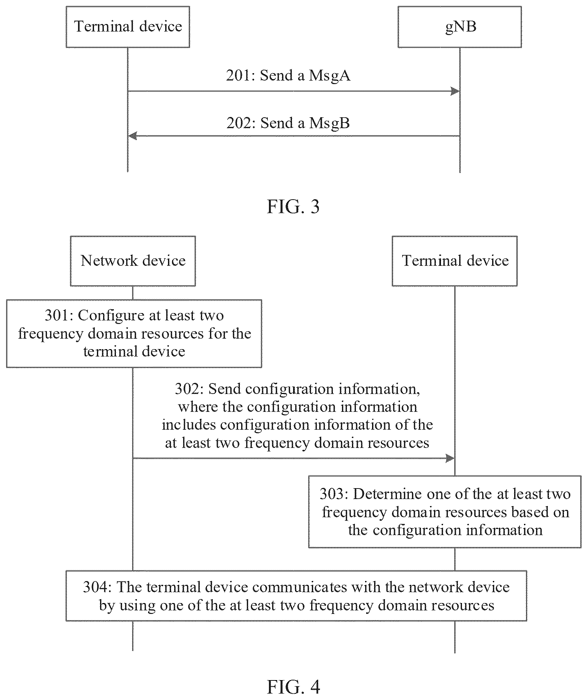

FIG. 3 is a schematic diagram of a random access process according to an embodiment of this application. As shown in FIG. 3, the random access process provided in this embodiment is a 2-step RACH process, and mainly includes the following steps.

Step 201: A terminal device sends a MsgA to a gNB.

In this step, the MsgA sent by the terminal device includes a Msg1 and a Msg3 in a 4-step RACH process, for example, a preamble or an ID of the terminal device. In an early data transmission scenario, the MsgA may further carry service data.

Step 202: The gNB sends a MsgB to the terminal device.

In this step, the MsgB is equivalent to a Msg2 (RAR) and a Msg4 (feedback) in the 4-step RACH process. For RARs for a same RO, the gNB may schedule a PDSCH by scrambling a CRC of DCI format 1_0 by using a MsgB-RNTI/RA-RNTI, where the PDSCH carries RARs of all or some random access requests for the RO. One RO is associated with only one MsgB-RNTI/RA-RNTI.

After sending the preamble, the terminal device starts a random access response time window MsgB-response window, and listens to, in the MsgB-response window, a PDCCH on which the CRC is scrambled by using the MsgB-RNTI that is delivered by the gNB. If the terminal device receives the physical downlink control channel PDCCH scrambled by using the MsgB-RNTI, and the RAR that is carried by the PDSCH scheduled by the PDCCH includes a MAC subPDU that is identified by using a random access preamble identifier RAPID that is the same as a sent preamble index, it is considered that the random access succeeds. Otherwise, it is considered that the random access fails.

If the terminal device successfully detects a preamble, but fails to detect a physical uplink shared channel PUSCH, fallback from a 2-step RACH to a 4-step RACH is performed, and a RAR returned by the gNB is a fallbackRAR If the terminal device successfully detects the preamble and the PUSCH, the RAR returned by the gNB is a successRAR.

In an existing NR technology, for the 2-step RACH process, the MsgB is transmitted on an initial downlink BWP, and the MsgA is transmitted on an initial uplink BWP. For the MsgA, all configured PRACH resources need to be entirely within an initial uplink BWP range according to a current protocol.

It should be noted that the technical solutions provided in embodiments of this application may be implemented in the random access process shown in FIG. 2, or may be implemented in the random access process shown in FIG. 3.

The following describes in detail the technical solutions provided in embodiments of this application by using specific embodiments. It should be noted that the technical solutions provided in embodiments of this application may include a part or all of the following content. The following specific embodiments may be combined with each other, and a same or similar concept or process may not be described in detail again in some embodiments.

FIG. 4 is a schematic interaction diagram of a frequency domain resource determining method according to an embodiment of this application. As shown in FIG. 4, the method provided in this embodiment includes the following steps.

Step 301: A network device configures at least two frequency domain resources for a terminal device.

The at least two frequency domain resources include at least one first-type frequency domain resource and at least one second-type frequency domain resource. The first-type frequency domain resource is for a first-type terminal device and/or a second-type terminal device to communicate with the network device. The second-type frequency domain resource is for the second-type terminal device to communicate with the network device. The first-type terminal device may be a common terminal, and the second-type terminal device may be a REDCAP-type terminal or another terminal.

It should be noted that a difference between the first-type terminal device and the second-type terminal device may include at least one of the following.

1. Different bandwidth capabilities: For example, a carrier bandwidth of the second-type terminal device is not greater than 50 MHz, for example, is at least one of 50 MHz, 40 MHz, 20 MHz, 15 MHz, 10 MHz, or 5 MHz, while a carrier bandwidth of the first-type terminal device is greater than 50 MHz.

2. Different quantities of transmit and receive antennas: For example, the second-type terminal device may support 2R1T (two receive antennas and one transmit antenna), or 1R1T (one receive antenna and one transmit antenna). The first-type terminal device may support 4R2T (four receive antennas and two transmit antenna). It may be understood that, when a same data transmission rate is implemented, because a quantity of transmit and receive antennas of the second-type terminal device is less than a quantity of transmit and receive antennas of the first-type terminal device, a maximum coverage area that can be implemented for data transmission between the second-type terminal device and a base station is smaller than a maximum coverage area that can be implemented for data transmission between the first-type terminal device and the base station.

3. Different maximum uplink transmit powers: For example, a maximum uplink transmit power of the second-type terminal device may be a value in 4 decibel-milliwatts (dBm) to 20 dBm. A maximum uplink transmit power of the first-type terminal device may be 23 dBm or 26 dBm.

4. Different protocol releases: The second-type terminal device may be a terminal device of NR Release 17 (release-17, Rel-17) or a release later than NR Rel-17. The first-type terminal device may be a terminal device of NR Release 15 (release-15, Rel-15) or NR Release 16 (release-16, Rel-16). The first-type terminal device may also be referred to as an NR legacy (NR legacy) terminal device.

5. Different carrier aggregation capabilities: For example, the second-type terminal device does not support carrier aggregation, but the first-type terminal device may support carrier aggregation. For another example, both the first-type terminal device and the second-type terminal device may support carrier aggregation, but a maximum quantity of carriers that can be aggregated simultaneously by the second-type terminal device is less than a maximum quantity of carriers that can be aggregated simultaneously by the first-type terminal device. For example, the second-type terminal device supports aggregation of a maximum of two carriers, but the first-type terminal device may support aggregation of a maximum of five carriers or 32 carriers.

6. Different duplex capabilities: For example, the second-type terminal device supports half-duplex frequency division duplex (frequency division duplex, FDD). The first-type terminal device supports full-duplex FDD.

7. Different data processing time capabilities: For example, a minimum delay between receiving downlink data and sending a feedback on the downlink data by the second-type terminal device is greater than a minimum delay between receiving downlink data and sending a feedback on the downlink data by the first-type terminal device; and/or a minimum delay between sending uplink data and receiving a feedback on the uplink data by the second-type terminal device is greater than a minimum delay between sending uplink data and receiving a feedback on the uplink data by the first-type terminal device.

8. Different processing capabilities (abilities/capabilities): For example, a baseband processing capability of the second-type terminal device is weaker than a baseband processing capability of the first-type terminal device. The baseband processing capability may include at least one of the following: a maximum quantity of multiple-input multiple-output (multiple-input multiple-output, MIMO) layers supported by a terminal device during data transmission, a quantity of hybrid automatic repeat request (Hybrid Automatic Repeat reQuest, HARQ) processes supported by a terminal device, or a maximum transport block size (transport block size, TBS) supported by a terminal device.

9. Different uplink and/or downlink peak transmission rates: A peak transmission rate is a maximum data transmission rate that can be reached by a terminal device in a unit of time (for example, per second). An uplink peak rate supported by the second-type terminal device may be lower than an uplink peak rate supported by the first-type terminal device, and/or a downlink peak rate supported by the second-type terminal device may be lower than a downlink peak rate supported by the first-type terminal device. For example, an uplink peak rate of the second-type terminal device is less than or equal to 50 Mbps, and a downlink peak rate of the second-type terminal device is less than or equal to 150 Mbps. An uplink peak rate of the first-type terminal device is greater than or equal to 50 Mbps, and a downlink peak rate of the first-type terminal device is greater than or equal to 150 Mbps. For another example, an uplink peak rate or a downlink peak rate of the second-type terminal device is at an order of 100 Mbps. An uplink peak rate or a downlink peak rate of the first-type terminal device is at an order of Gbps.

10. Different buffer (buffer) sizes: A buffer (buffer) may be understood as a total layer 2 (Layer 2, L2) buffer size, and is defined as a sum of a quantity of bytes buffered by a terminal device for all radio bearers in a radio link control (radio link control, RLC) transmit window, receive window, and reordering window, and a quantity of bytes buffered in a packet data convergence protocol (Packet Data Convergence Protocol, PDCP) reordering window. Alternatively, the buffer buffer may be understood as a total quantity of soft channel bits that can be used for HARQ processing.

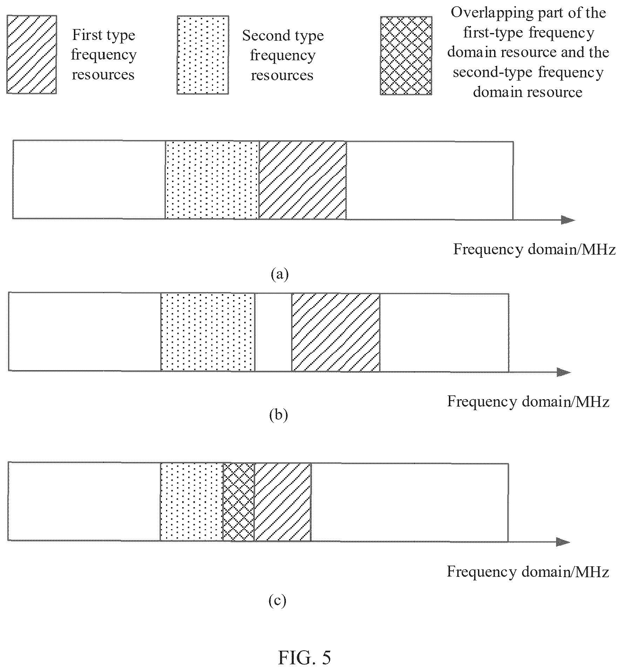

For example, FIG. 5 is a schematic diagram of the frequency domain resource configured by the network device for the terminal device according to this embodiment of this application. In FIG. 5, an example in which the network device configures one first-type frequency domain resource and one second-type frequency domain resource for the terminal device is used for description. In some embodiments, as shown in (a) in FIG. 5, the first-type frequency domain resource and the second-type frequency domain resource are two consecutive frequency domain resources in frequency domain. In some embodiments, as shown in (b) in FIG. 5, the first-type frequency domain resource and the second-type frequency domain resource are two inconsecutive frequency domain resources in frequency domain. In some embodiments, as shown in (c) in FIG. 5, the first-type frequency domain resource and the second-type frequency domain resource have an overlapping part.

In the following example, an initial uplink BWP is used as a frequency domain resource, a first initial uplink BWP is used as a first-type frequency domain resource, and a second initial uplink BWP is used as a second-type frequency domain resource. It should be understood that the frequency domain resource may alternatively be a downlink BWP.

For example, the network device configures at least two initial uplink BWPs for the terminal device, including a first initial uplink BWP and at least one second initial uplink BWP. The first initial uplink BWP is an initial uplink BWP configured by a network side for the terminal device in an existing protocol, and may also be referred to as a UL initial BWP. The first initial uplink BWP may be used by a common terminal to communicate with a network device. In some embodiments, the first initial uplink BWP may be further used by a REDCAP-type terminal to communicate with the network device. The second initial uplink BWP is an initial uplink BWP newly configured by the network side for the terminal device, and the second initial uplink BWP may be used by the REDCAP-type terminal to communicate with the network device.

In a possible implementation, the configured second initial uplink BWP may be used only for the REDCAP-type terminal. For example, the network device configures bandwidths of two second initial uplink BWPs for the terminal device, which are respectively 20 MHz and 10 MHz, or 20 MHz and 5 MHz. The bandwidths of the two second initial uplink BWPs may be used by the REDCAP-type terminal device to communicate with the network device. A dedicated initial uplink BWP is configured for the REDCAP-type terminal device. In a process of configuring the dedicated BWP, a bandwidth limit supported by the REDCAP-type terminal device may be fully considered, to ensure that the REDCAP-type terminal device can successfully access the network device by using the second initial uplink BWP. Further, second initial uplink BWPs of different bandwidths may be configured for REDCAP-type terminals of different bandwidths, so that a problem that the REDCAP-type terminal cannot access an existing first initial uplink BWP due to a bandwidth limitation can be effectively avoided, and access load of different BWPs can be balanced by configuring new second initial uplink BWPs of different types.

In a possible implementation, the configured second initial uplink BWP may be used for both the REDCAP-type terminal and the common terminal. For example, a bandwidth of the second initial uplink BWP configured by the network device for the terminal device is 20 MHz. The bandwidth of the second initial uplink BWP may be used by some REDCAP-type terminals to communicate with the network device, or may be used by the common terminal to communicate with the network device. In this case, the configuration of the second initial uplink BWP can effectively alleviate a case in which the first initial uplink BWP is overloaded, and an access capability of the REDCAP-type terminal is considered, thereby improving utilization of the second initial uplink BWP.

In embodiments of this application, the REDCAP-type terminal may be a massive machine type communication (massive Machine Type Communication, mMTC) terminal, a low-capability terminal, or an internet of things terminal. This is not limited in embodiments of this application.

A relationship between bandwidths of the second initial uplink BWP and the first initial uplink BWP includes the following several possible cases.

In a possible case, the network device configures one second initial uplink BWP and one first initial uplink BWP, and the bandwidth of the second initial uplink BWP is less than or equal to the bandwidth of the first initial uplink BWP. In the foregoing case, the terminal device may directly determine one of the at least two initial uplink BWPs based on configuration information from the network device, and communicate with the network device by using the BWP. One of the at least two initial uplink BWPs determined by the terminal device may be the first initial uplink BWP (on a premise that the bandwidth of the first initial uplink BWP is less than or equal to the maximum bandwidth supported by the terminal device) or the second initial uplink BWP. When a quantity of second initial uplink BWPs configured in the configuration information is 1, and the bandwidth of the first initial uplink BWP is greater than the bandwidth supported by the terminal device, the terminal device may directly determine, based on the configuration information, to access the second initial uplink BWP, and no additional indication information is required for indication.

In a possible case, the network device configures at least two second initial uplink BWPs and one first initial uplink BWP, and a bandwidth of each of the at least two second initial uplink BWPs is less than or equal to a bandwidth of the first initial uplink BWP. In the foregoing case, the terminal device may determine one second initial uplink BWP from the at least two second initial uplink BWPs based on configuration information, and communicate with the network device by using the second initial uplink BWP. Alternatively, the terminal device may determine one BWP from the first initial uplink BWP (on a premise that the bandwidth of the first initial uplink BWP is less than or equal to a maximum bandwidth supported by the terminal device) and the at least two initial uplink BWPs based on configuration information, and communicate with the network device by using the BWP.

In a possible case, the network device configures at least two second initial uplink BWPs and one first initial uplink BWP, a bandwidth of a part of the at least two second initial uplink BWPs is less than or equal to a bandwidth of the first initial uplink BWP, and a bandwidth of the other part of the second initial uplink BWPs is greater than the bandwidth of the first initial uplink BWP.

In a possible case, the network device configures at least one second initial uplink BWP and a plurality of first initial uplink BWPs. For example, a bandwidth of each of the second initial uplink BWP is less than or equal to a maximum bandwidth supported by the terminal device, and a bandwidth of at least one of the plurality of first initial uplink BWPs is less than or equal to the maximum bandwidth supported by the terminal device. The terminal device may determine one BWP from the at least one second initial uplink BWP and the at least one of the plurality of first initial uplink BWPs based on configuration information, and communicate with the network device by using the BWP. For example, a bandwidth of a part of the second initial uplink BWP is less than or equal to the maximum bandwidth supported by the terminal device, and the bandwidth of the at least one of the plurality of first initial uplink BWPs is less than or equal to the maximum bandwidth supported by the terminal device. The terminal device may determine one BWP from the part of the second initial uplink BWP and the at least one of the plurality of first initial uplink BWPs based on the configuration information, and communicate with the network device by using the BWP.

A relationship between the bandwidth of the first initial uplink BWP and the maximum bandwidth supported by the terminal device includes the following several possible cases.

In a possible case, the network device configures one first initial uplink BWP, where the bandwidth of the first initial uplink BWP is less than or equal to the maximum bandwidth supported by the terminal device, or the bandwidth of the first initial uplink BWP is greater than the maximum bandwidth supported by the terminal device.

In a possible case, the network device configures at least two first initial uplink BWPs, where a bandwidth of each of the at least two first initial uplink BWPs is greater than the maximum bandwidth supported by the terminal device, or a bandwidth of at least one of the at least two first initial uplink BWPs is less than or equal to the maximum bandwidth supported by the terminal device.

A relationship between the bandwidth of the second initial uplink BWP and the maximum bandwidth supported by the terminal device includes the following several possible cases.

In a possible case, the network device configures one second initial uplink BWP, and a bandwidth of the second initial uplink BWP is less than or equal to the maximum bandwidth supported by the terminal device.

In a possible case, the network device configures at least two second initial uplink BWPs, and bandwidths of all of the at least two second initial uplink BWPs are less than or equal to the maximum bandwidth supported by the terminal device.

In a possible case, the network device configures at least two second initial uplink BWPs, and a bandwidth of a part of the at least two second initial uplink BWPs is less than or equal to the maximum bandwidth supported by the terminal device.

In embodiments of this application, the maximum bandwidth supported by the terminal device may be a maximum bandwidth supported by the REDCAP-type terminal. Usually, maximum bandwidths supported by the REDCAP-type terminal include 5 MHz, 10 MHz, and 20 MHz.

Based on the foregoing descriptions, the following summarizes the configuration of the initial uplink BWP by the network device for the REDCAP-type terminal.

In a possible implementation, if the network device configures only the first initial uplink BWP, and does not configure the dedicated initial uplink BWP for the REDCAP-type terminal, and the bandwidth of the first initial uplink BWP is greater than the maximum bandwidth supported by the REDCAP-type terminal, it may be understood that the network device implicitly indicates that the REDCAP-type terminal is not allowed to access a cell.

In a possible implementation, if the network device configures the first initial uplink BWP and the dedicated initial uplink BWP for the REDCAP-type terminal, and the bandwidth of the first initial uplink BWP is greater than the maximum bandwidth supported by the REDCAP-type terminal, the REDCAP-type terminal in this instance may send uplink data by using the dedicated initial uplink BWP.

In a possible implementation, if the network device configures the first initial uplink BWP and the dedicated initial uplink BWP for the REDCAP-type terminal, and the bandwidth of the first initial uplink BWP is less than or equal to the maximum bandwidth supported by the REDCAP-type terminal, the REDCAP-type terminal in this instance may send uplink data by using the first initial uplink BWP or the dedicated initial uplink BWP.

Step 302: The network device sends the configuration information to the terminal device, where the configuration information includes configuration information of the at least two frequency domain resources.

In the following, the initial uplink BWP is used as the frequency domain resource. It should be understood that the frequency domain resource may alternatively be the downlink BWP.

In some embodiments, the network device may send the configuration information to the terminal device by using system information. The system information includes a SIB 1 and other system information. In some embodiments, the network device may alternatively send the configuration information by using higher layer signaling such as radio resource control layer RRC signaling or a media access control control element MAC CE. In some embodiments, the network device may alternatively send the configuration information by using physical layer signaling such as downlink control information DCI.

Configuration information of any one of the at least two initial uplink BWPs includes uplink transmission configuration information such as a frequency domain location and a bandwidth of the BWP, random access channel RACH configuration information, physical uplink shared channel PUSCH configuration information, and physical uplink control channel PUCCH configuration information, or a part of the uplink transmission configuration information.

Step 303: The terminal device determines one of the at least two frequency domain resources based on the configuration information.

In some embodiments, the terminal device may further determine one of at least two frequency domain resources according to a predefined or preconfigured rule.

It should be noted that in some embodiments, step 303 in this embodiment may be used as an optional step.

Step 304: The terminal device communicates with the network device by using one of the at least two frequency domain resources.

In the following example, an initial uplink BWP is used as the frequency domain resource, a first initial uplink BWP is used as a first-type frequency domain resource, and a second initial uplink BWP is used as a second-type frequency domain resource. It should be understood that the frequency domain resource may alternatively be a downlink BWP.

In a possible implementation, if the terminal device is the common terminal, the terminal device may communicate with the network device based on the first initial uplink BWP in the at least two initial uplink BWPs configured in the configuration information, that is, still communicate with the network device by using the initial uplink BWP.

Optionally, if bandwidths of one or more BWPs of the second initial uplink BWPs in the at least two initial uplink BWPs are less than or equal to a maximum bandwidth supported by the common terminal, the terminal device may alternatively communicate with the network device based on the second initial uplink BWP in the at least two initial uplink BWPs configured in the configuration information.

In a possible implementation, if the terminal device is the REDCAP-type terminal, the terminal device may communicate with the network device based on the at least one second initial uplink BWP in the at least two initial uplink BWPs configured in the configuration information.

Optionally, if a bandwidth of the at least one second initial uplink BWP in the at least two initial uplink BWPs is less than the maximum bandwidth supported by the REDCAP-type terminal, the terminal device may communicate with the network device based on any second initial uplink BWP in the at least two initial uplink BWPs configured in the configuration information.

Optionally, if a bandwidth of the first initial uplink BWP in the at least two initial uplink BWPs is 20 MHz, and a maximum bandwidth supported by the REDCAP-type terminal is also 20 MHz, the terminal device may communicate with the network device based on the first initial uplink BWP in the at least two initial uplink BWPs configured in the configuration information.

In a possible implementation, in a 4-step RACH process, the terminal device sends a Msg1, a Msg3, or other subsequent uplink data on one BWP in the at least two determined initial uplink BWPs.

In a possible implementation, in a 2-step RACH process, the terminal device sends a MsgA or other uplink data on one determined BWP in the at least two initial uplink BWPs.

According to the frequency domain resource determining method provided in this embodiment, the network device sends, to the terminal device, the configuration information in which the at least two frequency domain resources are configured. The terminal device determines one of the at least two frequency domain resources based on the configuration information, and communicates with the network device by using the frequency domain resource. The network device configures a plurality of frequency domain resources for the terminal device, and at least one of the plurality of frequency domain resources can be used by the terminal device. Therefore, a problem that the terminal device cannot normally communicate with the network device because a bandwidth of a frequency domain resource currently configured by the network side exceeds the maximum bandwidth supported by the terminal device can be avoided, so that data transmission performance of the terminal device is improved, and communication reliability is improved.

The foregoing embodiment shows the technical solution in which the network side configures the plurality of frequency domain resources for the terminal device, so that data transmission performance of different types of terminals is improved. Based on the foregoing embodiment, the following embodiment shows that the network side sends indication information to the terminal device. The terminal device specifically determines one of the plurality of frequency domain resources based on the indication information of the network side, and sends uplink data to the network side based on a bandwidth of the frequency domain resource.

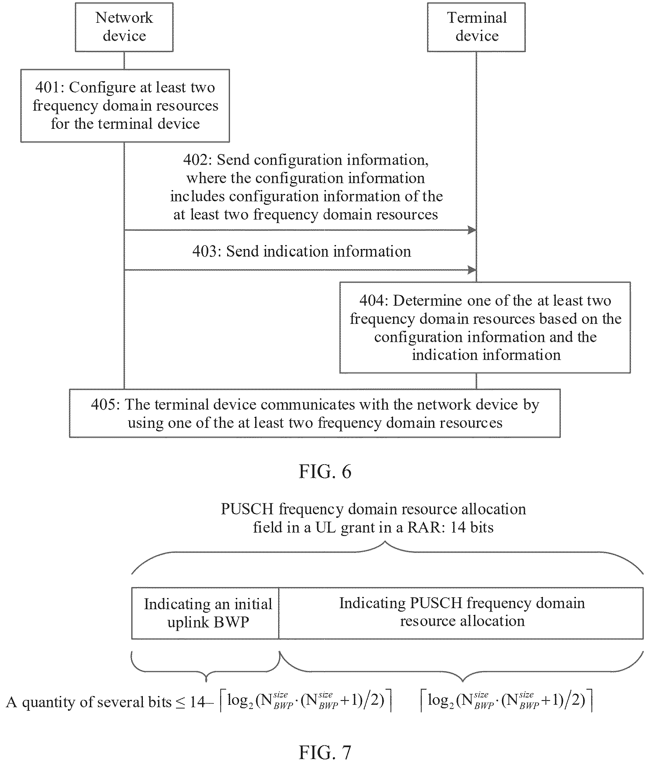

The following describes in detail the frequency domain resource determining method provided in this embodiment with reference to FIG. 6. FIG. 6 is a schematic interaction diagram of a frequency domain resource determining method according to an embodiment of this application. As shown in FIG. 6, the method provided in this embodiment includes the following steps.

Step 401: A network device configures at least two frequency domain resources for a terminal device.

Step 402: The network device sends the configuration information to the terminal device, where the configuration information includes configuration information of the at least two frequency domain resources.

Step 401 and step 402 in this embodiment are the same as step 301 and step 302 in the foregoing embodiment. For details, refer to the foregoing embodiment. Details are not described herein again.

Step 403: The network device sends indication information to the terminal device.

In the following example, an initial uplink BWP is used as the frequency domain resource, a first initial uplink BWP is used as a first-type frequency domain resource, and a second initial uplink BWP is used as a second-type frequency domain resource. It should be understood that the frequency domain resource may alternatively be a downlink BWP.

The indication information indicates the terminal device communicates with the network device by using one of at least two initial uplink BWPs. Alternatively, the indication information indicates that the terminal device communicates with the network device on a bandwidth of one of at least two initial uplink BWPs. In other words, the indication information indicates that the terminal device communicates with the network device by using a bandwidth of one of the at least two initial uplink BWPs

The BWP indicated by the indication information may be one of at least one first initial uplink BWP, or may be one of at least one second initial uplink BWP.

In a possible case, the network device configures one second initial uplink BWP and one first initial uplink BWP.

When the first initial uplink BWP may be used by a first-type terminal device and a second-type terminal device to communicate with the network device, and the second initial uplink BWP is for the second-type terminal device to communicate with the network device, the indication information may indicate that the terminal device communicates with the network device by using the first initial uplink BWP or the second initial uplink BWP.

When the first initial uplink BWP may be used only by a first-type terminal device to communicate with the network device, and the second initial uplink BWP is for a second-type terminal device to communicate with the network device, the indication information may indicate that the terminal device communicates with the network device by using the second initial uplink BWP. The terminal device may directly determine, based on the configuration information, to communicate with the network device by using the second initial uplink BWP. Alternatively, the terminal device may determine, based on the configuration information and the indication information, to communicate with the network device by using the second initial uplink BWP.

In a possible case, the network device configures at least two second initial uplink BWPs and one first initial uplink BWP, a bandwidth of each of the at least two second initial uplink BWPs is less than or equal to a bandwidth of the first initial uplink BWP, and the first initial uplink BWP may be used by the first-type terminal device and the second-type terminal device to communicate with the network device. In some embodiments, the indication information may indicate one of the at least two second initial uplink BWPs. In this case, the terminal device may determine, based on the configuration information and the indication information, one second initial uplink BWP from the at least two second initial uplink BWPs, and communicate with the network device by using the second initial uplink BWP. In this case, the indication information mainly indicates one of the at least two second initial uplink BWPs. In some embodiments, the indication information may indicate the first initial uplink BWP. In this case, the terminal device may determine, based on the configuration information and the indication information, the first initial uplink BWP, and communicate with the network device by using the first initial uplink BWP.

In this embodiment of this application, after configuring the at least two initial uplink BWPs for the terminal device, the network device may send the indication information to the terminal device through a random access process. In other words, the indication information may be included in a random access response message, and the random access response message is for the network device to respond to a random access request of the terminal device.

Specifically, the indication information may be included in the following several messages.

In a 4-step RACH process, the indication information may be included in a Msg2, and the Msg2 is for the network device to respond to the random access request of the terminal device. In a 2-step RACH process, the indication information may be included in a MsgB, and the MsgB is for the network device to respond to the random access request of the terminal device.

The following describes the indication information in the 4-step RACH process in detail.

In a possible implementation, the indication information is included in a random access response RAR of the Msg2, and the RAR is for the network device to respond to the random access request (that is, a Msg1) of the terminal device.

Specifically, that the indication information is included in the RAR of the Msg2 includes the following several cases.

In a first case, the indication information is located in a PUSCH frequency domain resource allocation indication field in an uplink grant UL grant in the RAR of the Msg2. Optionally, the indication information is located in several most significant bits (most significant bits, MSBs) of the PUSCH frequency domain resource allocation indication field in the UL grant in the RAR.

Specifically, for a non-shared spectrum channel access scenario, a PUSCH frequency domain resource allocation field in a UL grant in a RAR includes 14 bits, as shown in FIG. 7. When a bandwidth (bandwidth, BW) of an initial uplink BWP is set to 20 MHz and a subcarrier spacing (subcarrier spacing, SCS) is 30 kHz, 11 least significant bits in the PUSCH frequency domain resource allocation field indicate PUSCH frequency domain resource allocation. When a BW is 20 MHz and an SCS is 15 kHz, 13 least significant bits in the PUSCH frequency domain resource allocation field indicate PUSCH frequency domain resource allocation. In this case, several most significant bits of the PUSCH frequency domain resource allocation field are idle. For a REDCAP-type terminal, the most significant bits that are idle may be re-interpreted, and indicate an uplink BWP used by the terminal for uplink transmission, including the at least one second initial uplink BWP that is newly configured or the first initial uplink BWP.

Optionally, if the REDCAP-type terminal determines a plurality of available initial uplink BWPs, the terminal may further determine, based on an initial uplink BWP with a maximum quantity of physical resource blocks PRBs in the plurality of available initial uplink BWPs, a quantity of bits occupied by the PUSCH frequency domain resource allocation field in the UL grant in the RAR.

The following describes the indication information of the network device by using an example in which the network device preconfigures two initial uplink BWPs dedicated to a REDCAP-type terminal (that is, the network device preconfigures two second initial uplink BWPs). It is assumed that the two preconfigured initial uplink BWPs dedicated to the REDCAP-type terminal are respectively named NR REDCAP initial UL BWP#1 and NR REDCAP initial UL BWP#2, and initial UL may also be denoted as UL initial.

(1) When a bandwidth of a first initial uplink BWP is greater than a maximum bandwidth supported by an NR REDCAP-type terminal, one most significant bit of the PUSCH frequency domain resource allocation field in the UL grant in the RAR may indicate an initial uplink BWP used by the terminal device to send a Msg3 or perform other uplink transmission. An example is shown in Table 1.

Table 1

| 1 bit MSB of a PUSCH frequency domain resource allocation field | Index of an initial uplink BWP |
|---|---|
| 0 | Initial UL BWP 1_NR REDCAP |
| 1 | Initial UL BWP 2_NR REDCAP |

Optionally, two most significant bits of the PUSCH frequency domain resource allocation field in the UL grant in the RAR may indicate one of the two preconfigured initial uplink BWPs dedicated to the REDCAP-type terminal, and the two bits may indicate four indication states. For example, as shown in Table 2, two states respectively indicate two configured initial uplink BWPs dedicated to the REDCAP-type terminal. One state may indicate an existing initial uplink BWP in NR, that is, the first initial uplink BWP, which may be represented as UL initial BWP_NR legacy. Because a bandwidth of the existing initial uplink BWP in NR exceeds a maximum bandwidth supported by the REDCAP-type terminal, the network device may indicate, by indicating the existing initial uplink BWP in NR, that the REDCAP-type terminal is not allowed to access, or that a REDCAP-type terminal that currently accesses is not allowed to access.

**Table 2**

| 2 bits MSB of a PUSCH frequency domain resource allocation field | Index of an initial uplink BWP |
| --- | --- |
| 00 | Initial UL BWP_NR legacy (a REDCAP-type terminal is not allowed to access) |
| 01 | Initial UL BWP 1_NR REDCAP |
| 10 | Initial UL BWP 2_NR REDCAP |
| 11 | Reserved |

(2) When a bandwidth of the first initial uplink BWP is less than or equal to a maximum bandwidth supported by an NR REDCAP-type terminal, two most significant bits of the PUSCH frequency domain resource allocation field in the UL grant in the RAR may indicate an initial uplink BWP used by the terminal device to send a Msg3 or perform other uplink transmission. For example, as shown in Table 3, three states of two bits may respectively indicate the first initial uplink BWP and two initial uplink BWPs dedicated to the REDCAP-type terminal. Further, a remaining state of two bits may indicate whether the REDCAP-type terminal is allowed to access a current cell. When it indicates that access is not allowed, the REDCAP-type terminal cannot access the current cell.

**Table 3**

| MSBs of 2 bits of a PUSCH frequency domain resource allocation field | Index of an initial uplink BWP |
| --- | --- |
| 00 | Initial UL BWP_NR legacy |
| 01 | Initial UL BWP 1_NR REDCAP |
| 10 | Initial UL BWP 2_NR REDCAP |
| 11 | A REDCAP-type terminal is not allowed to access |

In a second case, the indication information is located in several least significant bits (least significant bits, LSBs) of a RAPID of a MAC subPDU in which a RAR is carried.

In a third case, the indication information is located in several bits of reserved bits of a MAC subPDU in which a RAR is carried.

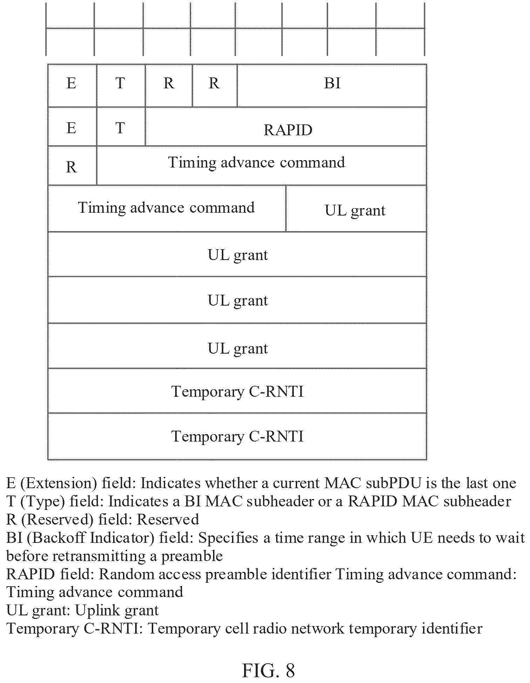

FIG. 8 is a schematic diagram of a structure of a MAC RAR according to an embodiment of this application. As shown in FIG. 8, the indication information may be located in several most significant bits of a PUSCH frequency domain resource allocation field in a UL grant shown in FIG. 8, may be located in several least significant bits of a RAPID field shown in FIG. 8, or may be located in several bits of an R field (namely, a reserved bit) shown in FIG. 8. It should be noted that if bits in any one of the foregoing fields are insufficient, the network device may further indicate, by combining bits in any two or three of the foregoing fields, an initial uplink BWP used by the terminal device to send a Msg3 or perform other uplink transmission. For example, Table 4 shows a bit allocation table of the UL grant in FIG. 8 (which may be used in the non-shared spectrum channel access scenario).

**Table 4**

| RAR grant field | Quantity of bits |
| --- | --- |
| Frequency hopping flag (frequency hopping flag) | 1 |
| PUSCH frequency domain resource allocation field (PUSCH frequency resource allocation) | 14 |
| PUSCH time domain resource allocation field (PUSCH time resource allocation) | 4 |
| Modulation and coding scheme (MCS) | 4 |
| Power control command for a PUSCH (TPC command for PUSCH) | 3 |

(continued)

| RAR grant field | Quantity of bits |
|---|---|
| Channel state information request (CSI request) | 1 |

In the foregoing implementation, the network device indicates, by using several bits in the random access response RAR of the Msg2, the initial uplink BWP used by the terminal device (which may be specifically the REDCAP-type terminal) to send the Msg3 or perform other uplink transmission, so that the terminal device accesses the current cell based on the indication information, and data transmission performance of the terminal device is improved. In addition, the following two possible implementations are further included.

In a possible implementation, the indication information is included in DCI (or a PDSCH used to schedule a carried RAR) used to schedule the Msg2. Specifically, the indication information is located in several bits of reserved reserved bits of the DCI.

Optionally, the network device may indicate, by using several bits of reserved bits in a CRC of DCI scrambled by using a RA-RNTI, an initial uplink BWP used by the terminal device to send a Msg3 or perform other uplink transmission. In this implementation, a length of bits for indicating the initial uplink BWP by the network device and an indication manner are the same as those in the first implementation. For details, refer to the foregoing descriptions.

In this implementation, a terminal device that initiates random access by using a same RO, or a terminal device that listens to a CRC of DCI scrambled by using a same RA-RNTI, may determine, by using several bits of reserved bits in DCI sent by the network device, the initial uplink BWP used for sending the Msg3 or performing other uplink transmission.

In some embodiments, because a plurality of terminal devices may initiate random access by using different preambles preambles on a same RO, the network device may group the terminal devices based on preamble IDs and/or RAPIDs, and the network device may indicate initial uplink BWPs of terminal devices in a same group by using several same bits. The network device may group the terminal devices based on a SIB 1 or a higher layer configuration. Grouping methods include the following:

Method 1: UEs with preamble IDs/RAPIDs mod N = X are grouped into one group, where X = {0, 1, ..., N-1}.

Method 2: UEs with M consecutive preamble IDs/RAPIDs are grouped into one group, for example, {0, 1, ..., M-1}, {M, M+1, M+2, ..., 2M-1}, ..., {M*N-M, M*N-M-2, ..., M*N-1}, where N is a quantity of groups, and M*N is a quantity of preambles multiplexed on a same RO.

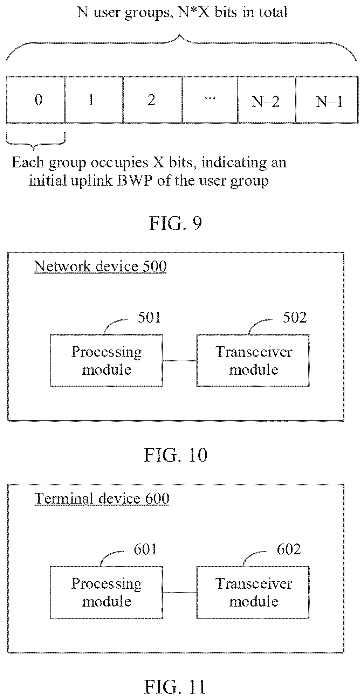

If each group uses X bits to indicate an initial uplink BWP used by the group, N*X bits in the reserved bits of the DCI need to be occupied in total, as shown in FIG. 9.

Optionally, the network device may group and transmit RARs corresponding to different preambles on a same RO. A grouping method is the same as that described above. In this case, $\lceil \log_2(N) \rceil$ (where N is a quantity of groups of RARs) least significant bits of the RAPID of the MAC subPDU in which the RAR is carried may be multiplexed, and may also indicate the initial uplink BWP used by the terminal device to send the Msg3 or perform other uplink transmission.

In the foregoing implementation, the network device indicates, by using several bits in the DCI for scheduling the Msg2, the initial uplink BWP used by the terminal device (which may be specifically the REDCAP-type terminal) to send the Msg3 or perform other uplink transmission, so that the terminal device accesses the current cell based on the indication information, and data transmission performance of the terminal device is improved.

In a possible implementation, the indication information is included in the DCI used to schedule the Msg2 and in the RAR. In this manner, a case in which bits in the DCI or the RAR are insufficient is mainly considered. The network device may jointly indicate one of the at least two initial uplink BWPs by using a combination of bits in the DCI and the RAR. The joint indication can reduce bit overheads. In some embodiments, the indication information may alternatively be included both in the DCI used to schedule the Msg2 and in the RAR of the Msg2.

Optionally, for the indication information in the 4-step RACH process, bits of any two, three, or more of all indication fields that may indicate the initial uplink BWP and that are mentioned in this embodiment may jointly indicate an initial uplink BWP of one terminal device or a group of terminal devices.

Optionally, the bit of the indication field may further indicate to perform repeated transmission of a channel such as the Msg2, the Msg3, or the Msg4 and indicate a quantity of repeated transmissions.

The foregoing embodiment shows the indication information in the 4-step RACH process. The following describes the indication information in the 2-step RACH process in detail.

For the 2-step RACH process, the terminal device sends a MsgA (including a Msg1 and a Msg3) through two channels: a PRACH and a PUSCH. In a non-early data transmission scenario, the Msg3 is carried in the PUSCH. In an early data transmission scenario, the PUSCH may carry uplink service data.

For an initial access scenario, in an implementation, an initial uplink BWP used by the terminal device to send the MsgA-PUSCH is predefined or preconfigured. The network device may preconfigure, by using a SIB 1 or other system information, configuration information of the initial uplink BWP for sending the MsgA-PUSCH, and the terminal device determines, based on the configuration information, the initial uplink BWP for sending the MsgA-PUSCH. The foregoing method is also applicable to a non-initial access scenario, for example, a scenario with a terminal device in an RRC connected state, an inactive state, or an idle state.

In another implementation, in addition to sending the configuration information to the terminal device, the network device may further send indication information to the terminal device. The sent indication information includes the following several possible implementations.

In a possible implementation, the indication information is included in a random access response RAR of a MsgB, and the RAR is for the network device to respond to the random access request (that is, the MsgA) of the terminal device.

Specifically, that the indication information is included in the RAR of the MsgB includes the following several cases.

In a first case, the indication information is located in a PUSCH frequency domain resource allocation indication field in an uplink grant UL grant in the RAR of the MsgB. Optionally, the indication information is located in several most significant bits of the PUSCH frequency domain resource allocation indication field in the UL grant in the RAR of the MsgB. Optionally, the indication information is located in several most significant bits of a PUSCH frequency domain resource allocation indication field in a UL grant in a successRAR/fallbackRAR of the MsgB.

In some embodiments, the network device receives the MsgA from the terminal device. When the network device detects both a preamble and the MsgA-PUSCH, random access succeeds, and the network device sends a contention resolution identifier in the MsgB. In addition, the network device indicates, by using a successRAR of the MsgB, an initial uplink BWP used by the terminal device for subsequent uplink transmission, including a MsgB-PUSCH feedback, a subsequent 4-step RA (random access) process, or a 2-step RA process.

In some embodiments, the network device receives the MsgA from the terminal device. When the network device detects only a preamble, and does not detect the MsgA-PUSCH, fallback from a 2-step RACH to a 4-step RACH may be performed, and the network device schedules, in the MsgB, a PUSCH by using a fallbackRAR to continue transmission. An important reason for a failure of MsgA-PUSCH detection is that channel quality is poor. In an implementation, the network device may indicate the terminal device to transmit the MsgA-PUSCH on an initial uplink BWP different from an initial uplink BWP used for the first time, so that frequency hopping can be performed in a larger frequency range, to increase a frequency selective gain.

In a second case, the indication information is located in several least significant bits of a RAPID of a MAC subPDU in which a RAR is carried. Optionally, the indication information is located in several least significant bits of a RAPID of a MAC subPDU in which a successRAR/fallbackRAR is carried.

In a third case, the indication information is located in several bits of reserved bits of a MAC subPDU in which a RAR is carried. Optionally, the indication information is located in several bits of reserved bits of a MAC subPDU in which a successRAR/fallbackRAR is carried.

In a possible implementation, the indication information is included in DCI used to schedule the MsgB. Specifically, the indication information is located in reserved reserved bits of the DCI.

Optionally, the network device may indicate, by using several bits of reserved bits in a CRC of DCI scrambled by using a RA/MsgB-RNTI, an initial uplink BWP used by the terminal device to send a Msg3 or perform other uplink transmission. In this implementation, a length of bits for indicating the initial uplink BWP by the network device and an indication manner are the same as those in the first implementation of the indication information in the embodiment of the 4-step RACH. For details, refer to the foregoing descriptions.

In some embodiments, the network device receives the MsgA from the terminal device. When the network device detects only a preamble, and does not detect the MsgA-PUSCH, fallback from a 2-step RACH to a 4-step RACH may be performed, and the network device schedules, in the MsgB, a PUSCH by using a fallbackRAR to continue transmission. In addition, the network device may further indicate, by using the DCI used to schedule the MsgB, an initial uplink BWP used by the terminal device for subsequent uplink transmission.

In a possible implementation, the indication information is included in the DCI used to schedule the MsgB and in the RAR. In this manner, a case in which bits in the DCI or the RAR are insufficient is mainly considered. The network device may jointly indicate one of the at least two initial uplink BWPs by using a combination of bits in the DCI and the RAR.

Optionally, for the indication information in the 2-step RACH process, bits of any two, three, or more of all indication fields that may indicate the initial uplink BWP and that are mentioned in this embodiment may jointly indicate an initial uplink BWP of one terminal device or a group of terminal devices.

Step 404: The terminal device determines one of the at least two frequency domain resources based on the configuration information and the indication information.

Step 405: The terminal device communicates with the network device by using one of the at least two frequency domain resources.

In the following, the initial uplink BWP is used as the frequency domain resource. It should be understood that the frequency domain resource may alternatively be the downlink BWP.

In the 4-step RACH process, the terminal device determines one of the at least two initial uplink BWPs based on the configuration information and the indication information, and sends the Msg3 or other subsequent uplink data on a bandwidth of the determined BWP.

In the 2-step RACH process, the terminal device determines one of the at least two initial uplink BWPs based on the configuration information and the indication information, and sends other subsequent uplink data on a bandwidth of the determined BWP.

According to the frequency domain resource determining method provided in this embodiment, the network device preconfigures at least two frequency domain resources for the terminal device by using system information or signaling, and may indicate, by using DCI used to schedule a Msg2/MsgB and/or a random access response message in a random access process, one frequency domain resource used by the terminal device for subsequent uplink data transmission. The terminal device determines, based on a preconfiguration and an indication of a network side, one of the at least two frequency domain resources, and communicates with the network device by using the frequency domain resource. In the foregoing solution, a problem that the terminal device cannot communicate with the network device because a frequency domain resource currently configured by the network side may exceed a maximum bandwidth supported by the terminal device is resolved, and reliability of a communication process is improved. In addition, an uplink frequency selective gain on the network side is increased. This also helps the network side flexibly perform load balancing between a plurality of frequency domain resources, so that data transmission performance of the terminal device is improved.

FIG. 10 is a schematic diagram of a structure of a network device according to an embodiment of this application. For example, a network device 500 is, for example, the network device in the embodiment shown in FIG. 4 or the embodiment shown in FIG. 6.

The network device 500 includes a processing module 501. Optionally, the network device 500 may further include a transceiver module 502. For example, the network device 500 may be a network device, or may be a chip used in the network device or another combined device or a component that has functions of the network device. When the network device 500 is the network device, the transceiver module 502 may be a transceiver. The transceiver may include an antenna, a radio frequency circuit, or the like. The processing module 501 may be a processor (or a processing circuit), for example, a baseband processor. The baseband processor may include one or more central processing units CPUs. When the network device 500 is a component having a function of the network device, the transceiver module 502 may be a radio frequency unit, and the processing module 501 may be a processor (or a processing circuit), for example, a baseband processor. When the network device 500 is a chip system, the transceiver module 502 may be an input/output interface of a chip (for example, a baseband chip), and the processing module 501 may be a processor (or a processing circuit) of the chip system, and may include one or more central processing units. It should be understood that the processing module 501 in this embodiment of this application may be implemented by a processor or a processor-related circuit component (or referred to as a processing circuit), and the transceiver module 502 may be implemented by a transceiver or a transceiver-related circuit component.

In a possible implementation, the transceiver module 502 is configured to send configuration information to a terminal device, where the configuration information includes configuration information of at least two frequency domain resources, and the at least two frequency domain resources include at least one first-type frequency domain resource and at least one second-type frequency domain resource. The first-type frequency domain resource is for a first-type terminal device and/or a second-type terminal device to communicate with the network device; and the second-type frequency domain resource is for the second-type terminal device to communicate with the network device. The processing module 501 is configured to communicate with the terminal device by using one of the at least two frequency domain resources.

Optionally, the first-type frequency domain resource includes a first initial uplink bandwidth part BWP, and the second-type frequency domain resource includes a second initial uplink BWP.

Optionally, the first-type frequency domain resource is for the first-type terminal device and the second-type terminal device to communicate with the network device. The transceiver module 502 is further configured to send indication information to the terminal device, where the indication information indicates one of the at least two frequency domain resources.

Optionally, the first-type frequency domain resource is used only by the first-type terminal device to communicate with the network device, and the transceiver module 502 is further configured to send indication information to the terminal device, where the indication information indicates one second-type frequency domain resource in the at least two frequency domain resources.

Optionally, the indication information is included in a random access response message, and the random access response message is for the network device to respond to a random access request of the terminal device.

Optionally, the indication information is included in a Msg2, and the Msg2 is for the network device to respond to the random access request of the terminal device.

Optionally, the indication information is included in a MsgB, and the MsgB is for the network device to respond to the random access request of the terminal device.

Optionally, the indication information is located in a physical uplink shared channel PUSCH frequency domain resource allocation indication field in an uplink grant in the random access response message. In a possible implementation, the indication information is located in at least one most significant bit in the physical uplink shared channel PUSCH frequency domain resource allocation indication field in the uplink grant in the random access response message.

Optionally, the indication information is included in downlink control information DCI, the DCI is used to schedule a random access response message, and the random access response message is for the network device to respond to a random access request of the terminal device. In a possible implementation, the indication information is included in a reserved bit of the DCI.

Optionally, the indication information is included in a random access response message and DCI for scheduling the random access response message, and bits in the random access response message and the DCI jointly indicate that the terminal device uses one of the at least two frequency domain resources to communicate with the network device.

Optionally, bandwidth of the second-type frequency domain resource is less than or equal to maximum bandwidth supported by the terminal device.

Optionally, the transceiver module 502 is specifically configured to send the configuration information to the terminal device by using system information, higher layer signaling, or physical layer signaling.

The network device provided in this embodiment may be configured to perform the technical solutions of the network device in any one of the foregoing method embodiments. Implementation principles and technical effects thereof are similar, and details are not described herein again.

FIG. 11 is a schematic diagram of a structure of a terminal device according to an embodiment of this application. For example, a terminal device 600 is the terminal device in the embodiment shown in FIG. 4 or the embodiment shown in FIG. 6.

The terminal device 600 includes a processing module 601. Optionally, the terminal device 600 may further include a transceiver module 602. For example, the terminal device 600 may be a terminal device, or may be a chip used in the terminal device, or another combined device or a component that has functions of the terminal device. When the terminal device 600 is the terminal device, the transceiver module 602 may be a transceiver. The transceiver may include an antenna, a radio frequency circuit, or the like. The processing module 601 may be a processor (or a processing circuit), for example, a baseband processor. The baseband processor may include one or more central processing units CPUs. When the terminal device 600 is a component having a function of the terminal device, the transceiver module 602 may be a radio frequency unit, and the processing module 601 may be a processor (or a processing circuit), for example, a baseband processor. When the terminal device 600 is a chip system, the transceiver module 602 may be an input/output interface of a chip (for example, a baseband chip), and the processing module 601 may be a processor (or a processing circuit) of the chip system, and may include one or more central processing units. It should be understood that the processing module 601 in this embodiment of this application may be implemented by a processor or a processor-related circuit component (or referred to as a processing circuit), and the transceiver module 602 may be implemented by a transceiver or a transceiver-related circuit component.

In a possible implementation, the transceiver module 602 is configured to receive configuration information from a network device, where the configuration information includes configuration information of at least two frequency domain resources, and the at least two frequency domain resources include at least one first-type frequency domain resource and at least one second-type frequency domain resource. The first-type frequency domain resource is for a first-type terminal device and/or a second-type terminal device to communicate with the network device; and the second-type frequency domain resource is for the second-type terminal device to communicate with the network device.

The processing module 601 is configured to determine one of the at least two frequency domain resources based on the configuration information, and communicate with the network device by using one of the at least two frequency domain resources.

Optionally, the first-type frequency domain resource includes a first initial uplink bandwidth part BWP, and the second-type frequency domain resource includes a second initial uplink BWP.

Optionally, the first-type frequency domain resource is for the first-type terminal device and the second-type terminal device to communicate with the network device. The transceiver module 602 is further configured to receive indication information from the network device, where the indication information indicates one of the at least two frequency domain resources. The processing module 601 is specifically configured to determine one of the at least two frequency domain resources based on the configuration information and the indication information.

Optionally, the first-type frequency domain resource is only used by the first-type terminal device to communicate with the network device. The transceiver module 602 is further configured to receive indication information from the network device, where the indication information indicates one of at least two second-type frequency domain resources. The processing module 601 is specifically configured to determine one of the at least two second-type frequency domain resources based on the configuration information and the indication information.

Optionally, the indication information is included in a random access response message, and the random access response message is for the network device to respond to a random access request of the terminal device.

Optionally, the indication information is included in a Msg2, and the Msg2 is for the network device to respond to the random access request of the terminal device.

Optionally, the indication information is included in a MsgB, and the MsgB is for the network device to respond to the random access request of the terminal device.

Optionally, the indication information is located in a physical uplink shared channel PUSCH frequency domain resource allocation indication field in an uplink grant in the random access response message. In a possible implementation, the indication information is located in at least one most significant bit in the physical uplink shared channel PUSCH frequency domain resource allocation indication field in the uplink grant in the random access response message.

Optionally, the indication information is included in downlink control information DCI, the DCI is used to schedule a random access response message, and the random access response message is for the network device to respond to a random access request of the terminal device. In a possible implementation, the indication information is included in a reserved bit of the DCI.

Optionally, the indication information is included in a random access response message and DCI for scheduling the random access response message, and bits in the random access response message and the DCI jointly indicate that the terminal device uses one of the at least two frequency domain resources to communicate with the network device.

Optionally, bandwidth of the second-type frequency domain resource is less than or equal to maximum bandwidth supported by the terminal device.

Optionally, the transceiver module 602 is specifically configured to receive, from system information, higher layer signaling, or physical layer signaling, the configuration information from the network device.

The terminal device provided in this embodiment may be configured to perform the technical solutions of the terminal device in any one of the foregoing method embodiments. Implementation principles and technical effects thereof are similar, and details are not described herein again.

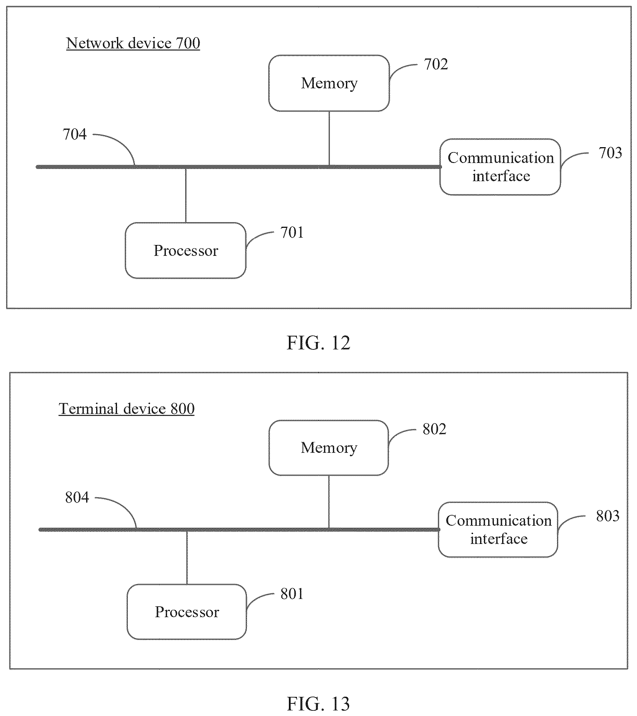

FIG. 12 is a schematic diagram of a hardware structure of a network device according to an embodiment of this application. As shown in FIG. 12, a network device 700 includes:

a processor 701, a memory 702, and a communication interface 703. The memory 702 is configured to store a computer program. The processor 701 is configured to execute the computer program stored in the memory 702, to implement the method performed by the network device in any one of the foregoing method embodiments. The communication interface 703 is configured to perform data communication or signal communication with another device.

Optionally, the memory 702 may be independent, or may be integrated with the processor 701. When the memory 702 is a component independent of the processor 701, the network device 700 may further include a bus 704, where the bus 704 is configured to connect the memory 702 and the processor 701.

In a possible implementation, the processing module 501 in FIG. 10 may be integrated into the processor 701 for implementation, and the transceiver module 502 may be integrated into the communication interface 703 for implementation. In a possible implementation, the processor 701 may be configured to implement a signal processing operation of the network device in the foregoing method embodiments, and the communication interface 703 may be configured to implement a signal receiving and sending operation of the network device in the foregoing method embodiments.

The network device provided in this embodiment may be configured to perform the method implemented by the network device in any one of the foregoing method embodiments. Implementation principles and technical effects thereof are similar, and details are not described herein again.

FIG. 13 is a schematic diagram of a hardware structure of a terminal device according to an embodiment of this application. As shown in FIG. 13, a terminal device 800 includes:

a processor 801, a memory 802, and a communication interface 803. The memory 802 is configured to store a computer program. The processor 801 is configured to execute the computer program stored in the memory 802, to implement the method performed by the terminal device in any one of the foregoing method embodiments. The communication interface 803 is configured to perform data communication or signal communication with another device.

Optionally, the memory 802 may be independent, or may be integrated with the processor 801. When the memory 802 is a component independent of the processor 801, the terminal device 800 may further include a bus 804, where the bus 804 is configured to connect the memory 802 and the processor 801.

In a possible implementation, the processing module 602 in FIG. 11 may be integrated into the processor 801 for implementation, and the transceiver module 601 may be integrated into the communication interface 803 for implementation. In a possible implementation, the processor 801 may be configured to implement a signal processing operation of the terminal device in the foregoing method embodiments, and the communication interface 803 may be configured to implement a signal receiving and sending operation of the terminal device in the foregoing method embodiments.

The terminal device in this embodiment may be configured to perform the method implemented by the terminal device in any one of the foregoing method embodiments. Implementation principles and technical effects thereof are similar, and details are not described herein again.

This application further provides a readable storage medium. The readable storage medium stores executable instructions, and when at least one processor of a network device executes the executable instructions, the network device performs the technical solutions of the network device in any one of the foregoing method embodiments.

This application further provides a readable storage medium. The readable storage medium stores executable instructions, and when at least one processor of a terminal device executes the executable instructions, the terminal device performs the technical solutions of the terminal device in any one of the foregoing method embodiments.

This application further provides a computer program product, including executable instructions, where the executable instructions are stored in a readable storage medium. At least one processor of a network device may read the executable instructions from the readable storage medium, and the at least one processor executes the executable instructions, so that the network device implements the technical solutions of the network device in any one of the foregoing method embodiments.

This application further provides a computer program product, including executable instructions, where the executable instructions are stored in a readable storage medium. At least one processor of a terminal device may read the executable instructions from the readable storage medium, and the at least one processor executes the executable instructions, so that the terminal device implements the technical solutions of the terminal device in any one of the foregoing method embodiments.

This application further provides a chip, including a processor and an interface. The processor can perform the technical solutions of the network device in any one of the foregoing method embodiments. Optionally, the chip further includes a memory. The memory stores a computer program. The processor is configured to execute the computer program stored in the memory, to implement the technical solutions of the network device in any one of the foregoing method embodiments.

An embodiment of this application further provides a chip, including a processor and an interface. The processor can perform the technical solutions of the terminal device in any one of the foregoing method embodiments. Optionally, the chip further includes a memory. The memory stores a computer program. The processor is configured to execute the computer program stored in the memory, to implement the technical solutions of the terminal device in any one of the foregoing method embodiments.

An embodiment of this application further provides a communication system, including at least one network device and a terminal device, where the network device may be configured to implement the technical solutions of the network device in any one of the foregoing method embodiments, and the terminal device may be configured to implement the technical solutions of the terminal device in any one of the foregoing method embodiments.

It should be noted that division of modules in the network device or the terminal device is merely logical function division. In actual implementation, all or some of the modules may be integrated into one physical entity, or may be physically separated. In addition, all these modules may be implemented in a form of software invoked by a processing element, or may be implemented in a form of hardware. Alternatively, a part of modules may be implemented in a form of software invoked by a processing element, and a part of modules are implemented in a form of hardware. For example, the processing module may be a separately disposed processing element, or may be integrated into a chip of the foregoing apparatus for implementation. In addition, the processing module may alternatively be stored in a memory of the foregoing apparatus in a form of program code, and a processing element of the foregoing apparatus invokes and executes a function of the foregoing determining module. An implementation of another module is similar to the implementation of the detection module. In addition, all or some of these modules may be integrated, or may be implemented independently. The processing element herein may be an integrated circuit and has a signal processing capability. In an implementation process, steps in the foregoing methods or the foregoing modules can be implemented by using a hardware integrated logical circuit in the processing element, or by using instructions in a form of software.

For example, the foregoing modules may be configured as one or more integrated circuits for implementing the foregoing method, such as one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of program code invoked by a processing element, the processing element may be a general-purpose processor, for example, a central processing unit (central processing unit, CPU) or another processor that can invoke the program code. For another example, these modules may be integrated together and implemented in a form of a system-on-a-chip (system-on-a-chip, SoC).

Further embodiments of the present invention are provided in the following. It should be noted that the numbering used in the following section does not necessarily need to comply with the numbering used in the previous sections.

Embodiment 1. A frequency domain resource determining method, comprising:

sending, by a network device, configuration information to a terminal device, wherein the configuration information comprises configuration information of at least two frequency domain resources, and the at least two frequency domain resources comprise at least one first-type frequency domain resource and at least one second-type frequency domain resource;

the first-type frequency domain resource is for a first-type terminal device and/or a second-type terminal device to communicate with the network device; and

the second-type frequency domain resource is for the second-type terminal device to communicate with the network device; and

communicating, by the network device, with the terminal device by using one of the at least two frequency domain resources.

Embodiment 2. The method according to embodiment 1, wherein the first-type frequency domain resource comprises a first initial uplink bandwidth part BWP, and the second-type frequency domain resource comprises a second initial uplink BWP.

Embodiment 3. The method according to Embodiment 1 or 2, wherein the first-type frequency domain resource is for the first-type terminal device and the second-type terminal device to communicate with the network device, and the method further comprises:

sending, by the network device, indication information to the terminal device, wherein the indication information indicates one of the at least two frequency domain resources.

Embodiment 4. The method according to embodiment 1 or 2, wherein the first-type frequency domain resource is used only by the first-type terminal device to communicate with the network device, and the method further comprises:

sending, by the network device, indication information to the terminal device, wherein the indication information indicates one second-type frequency domain resource in the at least two frequency domain resources.

Embodiment 5. The method according to embodiment 3 or 4, wherein the indication information is comprised in a random access response message, and the random access response message is for the network device to respond to a random access request of the terminal device.

Embodiment 6. The method according to embodiment 5, wherein the indication information is comprised in a Msg2, and the Msg2 is for the network device to respond to the random access request of the terminal device; or

the indication information is comprised in a MsgB, and the MsgB is for the network device to respond to the random access request of the terminal device.

Embodiment 7. The method according to embodiment 5, wherein the indication information is located in a physical uplink shared channel PUSCH frequency domain resource allocation indication field in an uplink grant in the random access response message.

Embodiment 8. The method according to embodiment 7, wherein the indication information is located in at least one most significant bit in the physical uplink shared channel PUSCH frequency domain resource allocation indication field in the uplink grant in the random access response message.

Embodiment 9. The method according to embodiment 3 or 4, wherein the indication information is comprised in downlink control information DCI, the DCI is used to schedule a random access response message, and the random access response message is for the network device to respond to a random access request of the terminal device.

Embodiment 10. The method according to embodiment 9, wherein the indication information is comprised in a reserved bit of the DCI.

Embodiment 11. The method according to embodiment 3 or 4, wherein the indication information is comprised in a random access response message and DCI for scheduling the random access response message, and bits in the random access response message and the DCI jointly indicate that the terminal device uses one of the at least two frequency domain resources to communicate with the network device.

Embodiment 12. The method according to any one of embodiments 1 to 11, wherein a bandwidth of the second-type frequency domain resource is less than or equal to a maximum bandwidth supported by the terminal device.

Embodiment 13. A frequency domain resource determining method, comprising:

receiving, by a terminal device, configuration information from a network device, wherein the configuration information comprises configuration information of at least two frequency domain resources, and the at least two frequency domain resources comprise at least one first-type frequency domain resource and at least one second-type frequency domain resource;

the first-type frequency domain resource is for a first-type terminal device and/or a second-type terminal device to communicate with the network device; and

the second-type frequency domain resource is for the second-type terminal device to communicate with the network device;

determining, by the terminal device, one of the at least two frequency domain resources based on the configuration information; and

communicating, by the terminal device, with the network device by using one of the at least two frequency domain resources.

Embodiment 14. The method according to embodiment 13, wherein the first-type frequency domain resource comprises a first initial uplink bandwidth part BWP, and the second-type frequency domain resource comprises a second initial uplink BWP.

Embodiment 15. The method according to embodiment 13 or 14, wherein the first-type frequency domain resource is for the first-type terminal device and the second-type terminal device to communicate with the network device, and the method further comprises:

receiving, by the terminal device, indication information from the network device, wherein the indication information indicates one of the at least two frequency domain resources; and

determining, by the terminal device, one of the at least two frequency domain resources based on the configuration information and the indication information.

Embodiment 16. The method according to embodiment 13 or 14, wherein the first-type frequency domain resource is used only by the first-type terminal device to communicate with the network device, and the method further comprises:

receiving, by the terminal device, indication information from the network device, wherein the indication information indicates one of at least two second-type frequency domain resources; and

determining, by the terminal device, one of the at least two second-type frequency domain resources based on the configuration information and the indication information.

Embodiment 17. The method according to embodiment 15 or 16, wherein the indication information is comprised in a random access response message, and the random access response message is for the network device to respond to a random access request of the terminal device.

Embodiment 18. The method according to embodiment 17, wherein the indication information is comprised in a Msg2, and the Msg2 is for the network device to respond to the random access request of the terminal device; or the indication information is comprised in a MsgB, and the MsgB is for the network device to respond to the random access request of the terminal device.

Embodiment 19. The method according to embodiment 17, wherein the indication information is located in a physical uplink shared channel PUSCH frequency domain resource allocation indication field in an uplink grant in the random access response message.

Embodiment 20. The method according to embodiment 19, wherein the indication information is located in at least one most significant bit in the physical uplink shared channel PUSCH frequency domain resource allocation indication field in the uplink grant in the random access response message.

Embodiment 21. The method according to embodiment 15 or 16, wherein the indication information is comprised in downlink control information DCI, the DCI is used to schedule a random access response message, and the random access response message is for the network device to respond to a random access request of the terminal device.

Embodiment 22. The method according to embodiment 21, wherein the indication information is comprised in a reserved bit of the DCI.

Embodiment 23. The method according to embodiment 15 or 16, wherein the indication information is comprised in a random access response message and DCI for scheduling the random access response message, and bits in the random access response message and the DCI jointly indicate that the terminal device uses one of the at least two frequency domain resources to communicate with the network device.

Embodiment 24. The method according to any one of embodiments 13 to 23, wherein a bandwidth of the second-type frequency domain resource is less than or equal to a maximum bandwidth supported by the terminal device.

Embodiment 25. A network device, comprising:

a memory and a processor, wherein
the memory is configured to store program instructions; and
the processor is configured to invoke the program instructions stored in the memory, to implement the method according to any one of embodiments 1 to 12.

Embodiment 26. A terminal device, comprising:

a memory and a processor, wherein
the memory is configured to store program instructions; and
the processor is configured to invoke the program instructions stored in the memory, to implement the method according to any one of embodiments 13 to 24.

Embodiment 27. A readable storage medium, wherein the readable storage medium stores executable instructions, and when at least one processor of a network device executes the executable instructions, the network device performs the method according to any one of embodiments 1 to 12.

Embodiment 28. A readable storage medium, wherein the readable storage medium stores executable instructions, and when at least one processor of a terminal device executes the executable instructions, the terminal device performs the method according to any one of embodiments 13 to 24.

Embodiment 29. A chip, comprising a processor and an interface, wherein the processor is configured to invoke, from a memory, a computer program stored in the memory, and run the computer program, to perform the method according to any one of embodiments 1 to 12.

Embodiment 30. A chip, comprising a processor and an interface, wherein the processor is configured to invoke, from a memory, a computer program stored in the memory, and run the computer program, to perform the method according to any one of embodiments 13 to 24.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like.

## Claims

1. A frequency domain resource determining method, comprising:

   sending configuration information to a terminal device, wherein the configuration information comprises configuration information of at least two frequency domain resources, and the at least two frequency domain resources comprise at least one first-type frequency domain resource and at least one second-type frequency domain resource;
   wherein the first-type frequency domain resource is for a first-type terminal device to communicate with the network device, or the first-type frequency domain resource is for a first-type terminal device and a second-type terminal device to communicate with the network device; and
   the second-type frequency domain resource is for the second-type terminal device to communicate with the network device; and
   communicating with the terminal device by one of the at least two frequency domain resources, wherein the second-type terminal device is redcap UE;
   wherein
   when the first-type frequency domain resource is less or equal than the maximum bandwidth of the second-type terminal device, the first-type frequency domain resource is used for the first-type terminal device and the second-type terminal device to communicate with the network device.

2. The method according to claim 1, wherein the maximum bandwidth which the second-type terminal device supports is 5MHz, 10MHz, or 20MHz.

3. The method according to claim 1 or 2, wherein the second-type frequency domain resource is less or equal than the maximum bandwidth which the second-type terminal device supports.

4. The method according to any one of claims 1 to 3, wherein the first-type frequency domain resource is a first initial downlink bandwidth part, BWP, and the second-type frequency domain resource is a second initial downlink, BWP.

5. The method according to any one of claims 1 to 4, wherein
a difference between the first-type terminal device and the second-type terminal device may include at least one of the following:

a carrier bandwidth of the second-type terminal device is one of 20 MHz, 15 MHz, 10 MHz, or 5 MHz, a carrier bandwidth of the first-type terminal device is greater than 50 MHz;
the second-type terminal device supports two receive antennas and one transmit antenna, or the second-type terminal device supports one receive antenna and one transmit antenna; the first-type terminal device supports four receive antennas and two transmit antenna;
the second-type terminal device supports half-duplex frequency division duplex (frequency division duplex, FDD). the first-type terminal device supports full-duplex FDD.

6. An apparatus comprising:

means for sending configuration information to a terminal device, wherein the configuration information comprises configuration information of at least two frequency domain resources, and the at least two frequency domain resources comprise at least one first-type frequency domain resource and at least one second-type frequency domain resource;
wherein the first-type frequency domain resource is for a first-type terminal device to communicate with the network device, or the first-type frequency domain resource is for a first-type terminal device and a second-type terminal device to communicate with the network device; and
the second-type frequency domain resource is for the second-type terminal device to communicate with the network device; and
communicating with the terminal device by one of the at least two frequency domain resources, wherein a maximum bandwidth of the second-type terminal device is less than a maximum bandwidth of the first-type terminal device, wherein the second-type terminal device is redcap UE;
wherein
when the first-type frequency domain resource is less or equal than the maximum bandwidth of the second-type terminal device, the first-type frequency domain resource is used for the first-type terminal device and the second-type terminal device to communicate with the network device.

7. The apparatus according to claim 6, wherein the maximum bandwidth which the second-type terminal device supports is 5MHz, 10MHz or 20MHz.

8. The apparatus according to claim 6 or 7, wherein the second-type frequency domain resource is less or equal than the maximum bandwidth which the second-type terminal device supports.

9. The apparatus according to any one of claims 6 to 8, wherein the first-type frequency domain resource is a first initial downlink bandwidth part, BWP, and the second-type frequency domain resource is a second initial downlink BWP.

10. The apparatus according to any one of claims 6 to 9, wherein
a difference between the first-type terminal device and the second-type terminal device may include at least one of the following:

a carrier bandwidth of the second-type terminal device is one of 20 MHz, 15 MHz, 10 MHz, or 5 MHz, a carrier bandwidth of the first-type terminal device is greater than 50 MHz;
the second-type terminal device supports two receive antennas and one transmit antenna, or the second-type terminal device supports one receive antenna and one transmit antenna; the first-type terminal device supports four receive antennas and two transmit antenna;
the second-type terminal device supports half-duplex frequency division duplex (frequency division duplex, FDD). the first-type terminal device supports full-duplex FDD.

11. A computer-readable storage medium comprising instructions which, when executed by a processor of an apparatus, cause the device to carry out the method according to any one of claims 1 to 5.

FIG. 1

| Terminal device | | gNB |
|---|---|---|

101: Send a resource configuration of a physical random access channel PRACH

102: Send a Msg1 through the PRACH

103: Send a Msg2, where the Msg2 includes a random access response RAR

104: Sends a Msg3 based on an indication of the RAR

105: Send a Msg4

FIG. 2

```
┌─────────────────┐                              ┌─────────────────┐
│ Terminal device │                              │      gNB        │
└─────────────────┘                              └─────────────────┘
         │                                                 │
         │          201: Send a MsgA                        │
         │────────────────────────────────────────────────>│
         │                                                 │
         │          202: Send a MsgB                        │
         │<────────────────────────────────────────────────│
         │                                                 │
```

FIG. 3

```
     ┌─────────────────┐                    ┌─────────────────┐
     │ Network device  │                    │ Terminal device │
     └─────────────────┘                    └─────────────────┘
              │                                      │
┌──────────────────────────────┐                    │
│ 301: Configure at least two   │                    │
│ frequency domain resources    │                    │
│ for the terminal device       │                    │
└──────────────────────────────┘                    │
              │                                      │
              │  302: Send configuration information,│
              │  where the configuration information │
              │  includes configuration information  │
              │  of the at least two frequency       │
              │  domain resources                    │
              │─────────────────────────────────────>│
              │                                      │
              │              ┌──────────────────────────────────┐
              │              │ 303: Determine one of the at least│
              │              │ two frequency domain resources    │
              │              │ based on the configuration         │
              │              │ information                        │
              │              └──────────────────────────────────┘
              │                                      │
┌───────────────────────────────────────────────────────────────┐
│ 304: The terminal device communicates with the network device  │
│ by using one of the at least two frequency domain resources    │
└───────────────────────────────────────────────────────────────┘
              │                                      │
```

FIG. 4

First type frequency resources

Second type frequency resources

Overlapping part of the first-type frequency domain resource and the second-type frequency domain resource

Frequency domain/MHz

(a)

Frequency domain/MHz

(b)

Frequency domain/MHz

(c)

FIG. 5

Network
device

Terminal
device

401: Configure at least two
frequency domain resources
for the terminal device

402: Send configuration information,
where the configuration information
includes configuration information of the
at least two frequency domain resources

403: Send indication information

404: Determine one of the at least two
frequency domain resources based on the
configuration information and the
indication information

405: The terminal device communicates with the network device by
using one of the at least two frequency domain resources

FIG. 6

PUSCH frequency domain resource allocation
field in a UL grant in a RAR: 14 bits

| Indicating an initial uplink BWP | Indicating PUSCH frequency domain resource allocation |
|---|---|

A quantity of several bits $\leq 14 - \left\lceil \log_2(N_{BWP}^{size} \cdot (N_{BWP}^{size}+1)/2) \right\rceil$ $\left\lceil \log_2(N_{BWP}^{size} \cdot (N_{BWP}^{size}+1)/2) \right\rceil$

FIG. 7

| E | T | R | R | BI |
| E | T | RAPID | | |
| R | Timing advance command | | | |
| Timing advance command | | | UL grant | |
| UL grant | | | | |
| UL grant | | | | |
| UL grant | | | | |
| Temporary C-RNTI | | | | |
| Temporary C-RNTI | | | | |

E (Extension) field: Indicates whether a current MAC subPDU is the last one
T (Type) field: Indicates a BI MAC subheader or a RAPID MAC subheader
R (Reserved) field: Reserved
BI (Backoff Indicator) field: Specifies a time range in which UE needs to wait before retransmitting a preamble
RAPID field: Random access preamble identifier Timing advance command: Timing advance command
UL grant: Uplink grant
Temporary C-RNTI: Temporary cell radio network temporary identifier

FIG. 8

N user groups, N*X bits in total

| 0 | 1 | 2 | ··· | N–2 | N–1 |
|---|---|---|-----|-----|-----|

Each group occupies X bits, indicating an
initial uplink BWP of the user group

FIG. 9

Network device 500

501

Processing
module

502

Transceiver
module

FIG. 10

Terminal device 600

601

Processing
module

602

Transceiver
module

FIG. 11

FIG. 12

FIG. 13

**EP 4 679 928 A2**

**Patent documents cited in the description**

- CN 202010791729